(19) Europäisches Patentamt
European Patent Office
Office européen des brevets

(11) EP 2 475 041 A1

(12) # EUROPEAN PATENT APPLICATION
published in accordance with Art. 153(4) EPC

(43) Date of publication:
**11.07.2012 Bulletin 2012/28**

(21) Application number: **10812062.7**

(22) Date of filing: **30.08.2010**

(51) Int Cl.:
***H01M 10/0567*** *(2010.01)* ***H01M 10/052*** *(2010.01)*
***H01M 10/0569*** *(2010.01)*

(86) International application number:
**PCT/JP2010/064752**

(87) International publication number:
**WO 2011/025016 (03.03.2011 Gazette 2011/09)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **31.08.2009 JP 2009200621**
**29.01.2010 JP 2010019215**

(71) Applicant: **Mitsubishi Chemical Corporation**
**Chiyoda-ku**
**Tokyo 100-8251 (JP)**

(72) Inventors:
- **ONUKI, Masamichi**
  **Ami-machi,**
  **Inashiki-gun**
  **Ibaraki 300-0332 (JP)**
- **KOTATO, Minoru**
  **Ami-machi,**
  **Inashiki-gun**
  **Ibaraki 300-0332 (JP)**
- **FUKAMIZU, Koji**
  **Ami-machi,**
  **Inashiki-gun**
  **Ibaraki 300-0332 (JP)**
- **MACHIDA, Yumiko**
  **Ami-machi,**
  **Inashiki-gun**
  **Ibaraki 300-0332 (JP)**
- **OHASHI, Youichi**
  **Ami-machi,**
  **Inashiki-gun**
  **Ibaraki 300-0332 (JP)**

(74) Representative: **Vossius & Partner**
**Siebertstrasse 4**
**81675 München (DE)**

(54) **NON-AQUEOUS ELECTROLYTIC SOLUTION, AND NON-AQUEOUS ELECTROLYTE BATTERY COMPRISING SAME**

(57) A nonaqueous electrolytic solution comprising a lithium salt and a nonaqueous organic solvent, wherein the nonaqueous organic solvent comprises: at least one member selected from the group consisting of saturated cyclic carbonates, linear carbonates, and aliphatic carboxylic acid esters, in a total proportion exceeding 90% by volume; and a fluorine-substituted aromatic ester compound represented by the following general formula (1) in an amount of 0.01-10% by weight based on the weight of the whole nonaqueous electrolytic solution; and a nonaqueous-electrolyte battery including the nonaqueous electrolytic solution.

Xn-Ph-OCOR (1)

[In general formula (1), Ph is phenylene, and R is a hydrocarbon group which has 1-12 carbon atoms and may have been substituted with a fluorine atom. X is a fluorine atom or a fluorine-substituted alkyl group having 1-12 carbon atoms, and n is an integer of 1-4.]

Furthermore disclosed are: a nonaqueous electrolytic solution which comprises an electrolyte, a nonaqueous solvent and a compound represented by general formula (3); and a nonaqueous-electrolyte battery including the nonaqueous electrolytic solution.

EP 2 475 041 A1

[Chem. 1]

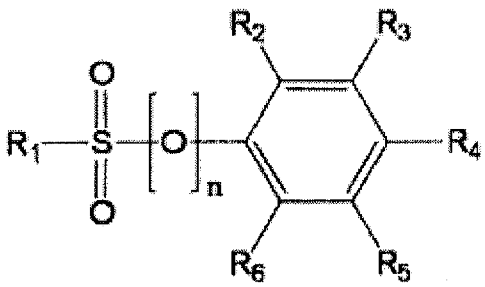

(3)

[In general formula (3), $R_1$ represents a hydrocarbon group which has 1-12 carbon atoms and may have been substituted with a fluorine atom, and $R_2$ to $R_6$ each independently represent a hydrogen atom, a fluorine atom, or an alkyl group which has 1-12 carbon atoms and may have been substituted with a fluorine atom, at least one of $R_2$ to $R_6$ representing an alkyl group which has 2 or more carbon atoms and may have been substituted with a fluorine atom. Symbol n represents an integer of 0 or 1. When n is 1, at least one of $R_2$ to $R_6$ represents an alkyl group which has 5 or more carbon atoms and may have been substituted with a fluorine atom.]

## Description

Technical Field

The present invention relates to a nonaqueous electrolytic solution and a nonaqueous-electrolyte battery employing the same.

Background Art

Lithium secondary batteries have advantages of high energy density and less susceptibility to self-discharge. Lithium secondary batteries hence are in extensive use in recent years as power sources for mobile appliances for public use, e.g., portable telephones, notebook type personal computers, and PDAs, and in other applications.

Ordinary electrolytic solutions for lithium secondary batteries include a lithium salt as a supporting electrolyte and a nonaqueous solvent as main components. The nonaqueous solvent to be used is required, for example, to have a high permittivity so as to dissociate the lithium salt, to have a high ionic conductivity in a wide temperature range, and to be stable in the battery.

Since it is difficult to meet those requirements with a single solvent, a combination of a high-boiling solvent represented by propylene carbonate, ethylene carbonate, and the like with a low-boiling solvent such as dimethyl carbonate, diethyl carbonate, and the like is usually used as a nonaqueous solvent.

Lithium secondary batteries were evaluated for various properties including initial capacity, rate characteristics, cycle characteristics, high-temperature storability, low-temperature characteristics, continuous-charge characteristics, self-discharge characteristics, and overcharge inhibitive properties, and many reports have hitherto been made on techniques in which various aids are incorporated in a small amount into an electrolytic solution in order to improve these properties.

In patent document 1 is disclosed a nonaqueous-electrolyte secondary battery employing an electrolytic solution which contains a phosphoric acid ester compound and an ether or ester compound having a halogen-substituted phenyl group. Specifically, there is a statement therein to the effect that self-discharge characteristics during 45˚C storage are improved by using an electrolytic solution containing trimethyl phosphate (TMP) and 3-fluoroanisole.

Patent document 2 includes a statement to the effect that aromatic compounds such as 1-acetoxy-2-fluorobenzene, 1-acetoxy-3-fluorobenzene, and 1-acetoxy-4-fluorobenzene are effective as additives for batteries. However, what property the aromatic compounds specifically improve is not shown therein.

Patent document 3 proposes a technique in which an additive that polymerizes at a battery voltage not lower than the maximum working voltage of a battery is incorporated into an electrolytic solution to thereby increase the internal resistance of the battery and protect the battery. Patent document 4 proposes a technique in which an additive that polymerizes at a battery voltage not lower than the maximum working voltage of a battery and that thereby generates a gas and a pressure is incorporated into an electrolytic solution to thereby enable an internal circuit breaker disposed for the purpose of protection against overcharge to work without fail. Disclosed as those additives are aromatic compounds such as biphenyl, thiophene, and furan.

Furthermore, patent document 5 proposes a nonaqueous-electrolyte secondary battery system including: a nonaqueous-electrolyte secondary battery in which phenylcyclohexane has been added to the nonaqueous electrolytic solution in an amount in the range of 0.1-20 parts by weight in order to inhibit battery characteristics from decreasing when biphenyl or thiophene is used; and a charge control system which detects an increase in battery temperature to break the charging circuit.

Patent document 6 proposes a technique in which a carbonate having at least an unsaturated bond or a halogen atom and a chain compound having a sulfur-containing functional group represented by a specific structure are incorporated into a nonaqueous electrolytic solution in order to improve the cycle characteristics of a nonaqueous-electrolyte secondary battery including a negative-electrode active material having at least one kind of atoms selected from the group consisting of Si, Sn, and Pb atoms.

Prior-Art Documents

Patent Documents

Patent Document 1: JP-A-2003-282055
Patent Document 2: JP-T-2009-512418 (The term "JP-T" as used herein means a published Japanese translation ofaPCT patent application.)

Patent Document 3: JP-A-9-106835
Patent Document 4: JP-A-9-171840
Patent Document 5: JP-A-2002-50398
Patent Document 6: JP-A-2007-317654

Summary of the Invention

Problems that the Invention is to Solve

In recent years, lithium secondary batteries are increasingly required to have higher performances, and it is desired to attain all of various properties, such as high capacity, cycle characteristics, high-temperature storability, continuous-charge characteristics, and overcharge characteristics, on a high level. In particular, an improvement in safety such as overcharge characteristics is of urgent necessity.
However, the incorporation of an additive into an electrolytic solution for the purpose of improving overcharge characteristics has often been accompanied with a demerit that storability is impaired. As will be described later as a Comparative Example, use of the electrolytic solution disclosed in patent document 1 resulted in considerably deteriorated storability. Furthermore, use of the electrolytic solutions disclosed in patent documents 3 to 5 also resulted in a decrease in high-temperature storability. Moreover, when the electrolytic solution described in patent document 6 was used, the battery was unsatisfactory with respect to improvement in safety during overcharge.
The invention has been achieved in view of the problems described above. An object of the invention is to provide nonaqueous electrolytic solutions and nonaqueous-electrolyte batteries which have improved overcharge characteristics and which further have improved storability and high-temperature continuous-charge characteristics.

Means for Solving the Problems

The present inventors diligently made investigations in order to overcome the problems described above. As a result, the inventions have found that those problems can be eliminated by using a nonaqueous electrolytic solution characterized by including at least one member selected from the group consisting of saturated cyclic carbonates, linear carbonates, and aliphatic carboxylic acid esters in a total proportion exceeding 90% by volume and further containing a fluorine-substituted aromatic ester compound of a specific structure in a specific amount based on the weight of the nonaqueous electrolytic solution, or by using a nonaqueous electrolytic solution containing a specific aromatic sulfur compound. The invention has been thus completed.
Namely, essential points of the invention are as shown below.

1. A nonaqueous electrolytic solution comprising a lithium salt and a nonaqueous organic solvent, wherein the nonaqueous organic solvent comprises: at least one member selected from the group consisting of saturated cyclic carbonates, linear carbonates, and aliphatic carboxylic acid esters, in a total proportion exceeding 90% by volume; and a fluorine-substituted aromatic ester compound represented by the following general formula (1) in an amount of 0.01-10% by weight based on the weight of the whole nonaqueous electrolytic solution.

[Chem. 1]

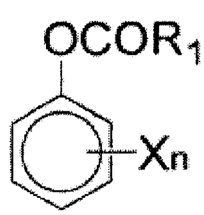

(1)

[In general formula (1), $R_1$ is a hydrocarbon group which has 1-12 carbon atoms and may have been substituted with a fluorine atom. X is a fluorine atom or a fluorine-substituted alkyl group having 1-12 carbon atoms, and n is an integer of 1-4.]
2. The nonaqueous electrolytic solution according to 1 above wherein the saturated cyclic carbonates are at least one member selected from the group consisting of ethylene carbonate, propylene carbonate, butylene carbonate, monofluoroethylene carbonate, and difluoroethylene carbonate.

3. The nonaqueous electrolytic solution according to 1 or 2 above wherein the linear carbonates are at least one member selected from the group consisting of dimethyl carbonate, ethyl methyl carbonate, diethyl carbonate, methyl propyl carbonate, and ethyl propyl carbonate.

4. The nonaqueous electrolytic solution according to any one of 1 to 3 above wherein the aliphatic carboxylic acid esters are at least one member selected from the group consisting of compounds represented by the following general formula (2).

[Chem. 2]

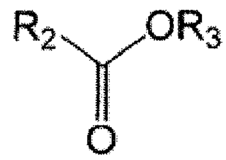

(2)

[In general formula (2), $R_2$ is an alkyl group which has 1-4 carbon atoms and may have been substituted with a fluorine atom. $R_3$ is an alkyl group which has 1-4 carbon atoms and may have been substituted with a fluorine atom.]

5. The nonaqueous electrolytic solution according to any one of 1 to 4 above which further comprises at least one member selected from the group consisting of unsaturated cyclic carbonates, monofluorophosphoric acid salts, difluorophosphoric acid salts, sultones, and sulfites, in an amount of 0.01-10% by weight based on the weight of the whole nonaqueous electrolytic solution.

6. A nonaqueous-electrolyte battery comprising: a negative electrode and a positive electrode which are capable of occluding and releasing lithium ions; and a nonaqueous electrolytic solution, wherein the nonaqueous electrolytic solution is the nonaqueous electrolytic solution according to any one of 1 to 5 above.

7. A nonaqueous electrolytic solution comprising an electrolyte, a nonaqueous solvent, and a compound represented by general formula (3).

[Chem. 3]

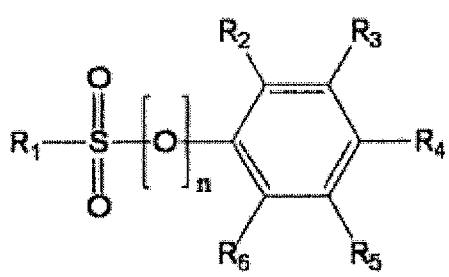

(3)

[In general formula (3), $R_1$ represents a hydrocarbon group which has 1-12 carbon atoms and may have been substituted with a fluorine atom, and $R_2$ to $R_6$ each independently represent a hydrogen atom, a fluorine atom, or an alkyl group which has 1-12 carbon atoms and may have been substituted with a fluorine atom, at least one of $R_2$ to $R_6$ representing an alkyl group which has 2 or more carbon atoms and may have been substituted with a fluorine atom. Symbol n represents an integer of 0 or 1. When n is 1, at least one of$R_2$ to $R_6$ represents an alkyl group which has 5 or more carbon atoms and may have been substituted with a fluorine atom.]

8. The nonaqueous electrolytic solution according to 7 above wherein in general formula (3), $R_1$ represents a group selected from the group consisting of methyl, ethyl, vinyl, phenyl, and trifluoromethyl, and $R_2$ to $R_6$ each independently represent a hydrogen atom or an alkyl group which has 2-6 carbon atoms and may have been substituted with a fluorine atom.

9. The nonaqueous electrolytic solution according to 7 or 8 above wherein in general formula (3), at least one of $R_2$ to $R_6$ represents an alkyl group which has 5 or more carbon atoms and may have been substituted with a fluorine atom.

10. The nonaqueous electrolytic solution according to any one of 7 to 9 above which comprises the compound represented by general formula (3) in an amount of 0.001-10% by mass based on the weight of the whole nonaqueous electrolytic solution.

11. The nonaqueous electrolytic solution according to any one of 7 to 10 above which further comprises at least one compound selected from the group consisting of cyclic carbonate compounds having a carbon-carbon unsaturated bond, cyclic carbonate compounds having a fluorine atom, monofluorophosphoric acid salts, and difluorophosphoric acid salts.

12. A nonaqueous-electrolyte battery comprising a negative electrode and a positive electrode which are capable of occluding and releasing lithium ions and a nonaqueous electrolytic solution, wherein the nonaqueous electrolytic solution is the nonaqueous electrolytic solution according to any one of 7 to 11 above.

Effects of the Invention

According to the invention, nonaqueous electrolytic solutions which, when used in lithium secondary batteries, can greatly improve overcharge characteristics and can further improve storability and continuous-charge characteristics can be provided. Furthermore, excellent nonaqueous-electrolyte batteries employing the nonaqueous electrolytic solutions can be provided.

Modes for Carrying Out the Invention

Embodiments of the invention will be explained below. However, the invention should not be construed as being limited to the following embodiments, and the invention can be modified at will unless the modifications depart from the spirit thereof.

The nonaqueous-electrolyte batteries of the invention are configured of a nonaqueous electrolytic solution, a positive electrode, and a negative electrode. The nonaqueous-electrolyte batteries of the invention may be equipped with other constituent elements.

First, an aspect (aspect I) of the nonaqueous electrolytic solutions of the invention is explained.

[I. Nonaqueous Electrolytic Solution]

This nonaqueous electrolytic solution of the invention (hereinafter suitably referred to also as "nonaqueous electrolytic solution according to the invention") is a nonaqueous electrolytic solution including a lithium salt and a nonaqueous organic solvent, wherein the nonaqueous organic solvent includes at least one member selected from the group consisting of saturated cyclic carbonates, linear carbonates, and aliphatic carboxylic acid esters, in a total proportion exceeding 90% by volume and further contains a fluorine-substituted aromatic ester compound represented by the following general formula (1) (hereinafter suitably referred to also as "fluorine-substituted aromatic ester compound according to the invention") in an amount of 0.01-10% by weight based on the weight of the nonaqueous electrolytic solution.

[Chem. 4]

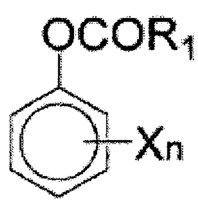

(1)

In general formula (1), $R_1$ is a hydrocarbon group which has 1-12 carbon atoms and may have been substituted with a fluorine atom. X is a fluorine atom or a fluorine-substituted alkyl group having 1-12 carbon atoms, and n is an integer of 1-4.

[1. Fluorine-Substituted Aromatic Ester Compound]

[1-1. Kind]

In general formula (1), $R_1$ is a hydrocarbon group, which may have been fluorine-substituted. Preferred examples of the hydrocarbon group represented by $R_1$ include alkyl groups, aryl groups, alkenyl groups, and aralkyl groups. Preferred of these are alkyl groups and aryl groups. More preferred are alkyl groups.

In the case where $R_1$ is an alkyl group, the number of carbon atoms of the alkyl group is usually preferably 1-12, more preferably 1-8, even more preferably 1-4, especially preferably 1-2, most preferably 1. When the number of carbon atoms therein is within that range, the fluorine-substituted aromatic ester compound has sufficient solubility in the nonaqueous electrolytic solution and the effects of the invention can be sufficiently produced.

Preferred examples of the alkyl group represented by $R_1$ include methyl, ethyl, propyl, butyl, pentyl, hexyl, and octyl. More preferred of these are methyl, ethyl, propyl, and butyl. Even more preferred are methyl and ethyl. Most preferred is methyl.

In the case where $R_1$ is an alkenyl group, the number of carbon atoms of the alkenyl group is usually preferably 2-12, more preferably 2-8, even more preferably 2-4, especially preferably 2-3, most preferably 2. When the number of carbon atoms therein is within that range, the fluorine-substituted aromatic ester compound has sufficient solubility in the nonaqueous electrolytic solution and the effects of the invention can be sufficiently produced.

Preferred examples of the alkenyl group represented by $R_1$ include vinyl, isopropenyl, and allyl. Of these, vinyl is more preferred.

In the case where $R_1$ is an aryl group, the number of carbon atoms of the aryl group is usually preferably 6-12. Examples thereof include phenyl, tolyl, ethylphenyl, dimethylphenyl, isopropyl, t-butylphenyl, t-amylphenyl, cyclohexylphenyl, $\alpha$-naphthyl, and $\beta$-naphthyl. More preferred of these are phenyl, t-butylphenyl, and t-amylphenyl.

In the case where $R_1$ is an aralkyl group, the number of carbon atoms of the aralkyl group is usually preferably 7-12. Examples thereof include benzyl, $\alpha$-phenethyl, and $\beta$-phenethyl. Of these, benzyl is more preferred.

With respect to $R_1$, part or all of the hydrogen atoms contained as components of the hydrocarbon group each may have been replaced with a fluorine atom. Examples thereof include monofluoromethyl, difluoromethyl, trimethylfluoromethyl, 2,2,2-trifluoroethyl, pentafluoroethyl, monofluorophenyl, and pentafluorophenyl.

In general formula (1), X is a fluorine atom or a fluorine-substituted alkyl group having 1-12 carbon atoms, and preferably is a fluorine atom.

In the case where X is a fluorine-substituted alkyl group, the number of carbon atoms of the alkyl group is usually preferably 1-12, more preferably 1-8, even more preferably 1-4, especially preferably 1-2, most preferably 1.

Preferred examples of the fluorine-substituted alkyl group represented by X include monofluoromethyl, difluoromethyl, trifluoromethyl, 2,2,2-trifluoroethyl, pentafluoroethyl, perfluorobutyl, perfluorooctyl, and perfluorododecyl.

Preferred of these are monofluoromethyl, difluoromethyl, trifluoromethyl, 2,2,2-trifluoroethyl, and pentafluoroethyl. Even more preferred are monofluoromethyl, difluoromethyl, and trifluoromethyl. Most preferred is trifluoromethyl.

In general formula (1), n is an integer of 1-4, preferably 1-3, more preferably 1. In case where n is larger than 4, such an aromatic ester compound is expensive and difficult to procure and tends to be difficult to use in lithium secondary batteries.

It is preferred that the fluorine-substituted aromatic ester compound should have a molecular weight of generally 150 or higher. The molecular weight thereof is usually preferably 400 or lower, more preferably 250 or lower. When the molecular weight thereof is not higher than the upper limit, this compound has sufficient solubility in the nonaqueous electrolytic solution and the effects of the invention can be sufficiently produced.

Examples of the fluorine-substituted aromatic ester compound include fluorine-substituted phenyl acetates, fluorine-substituted alkylphenyl acetates, fluorine-substituted phenyl propionates, fluorine-substituted alkylphenyl propionates, fluorine-substituted phenyl butyrates, fluorine-substituted phenyl benzoates, fluorine-substituted phenyl acrylates, fluorine-substituted phenyl difluoroacetates, fluorine-substituted phenyl trifluoroacetates, and fluorine-substituted phenyl pentafluoropropionates.

Preferred of these are fluorine-substituted phenyl acetates, fluorine-substituted alkylphenyl acetates, fluorine-substituted phenyl propionates, and fluorine-substituted phenyl trifluoroacetates. More preferred are fluorine-substituted phenyl acetates.

Examples of the fluorine-substituted phenyl acetates include 2-fluorophenyl acetate, 3-fluorophenyl acetate, 4-fluorophenyl acetate, 2,3-difluorophenyl acetate, 2,4-difluorophenyl acetate, 2,5-difluorophenyl acetate, 2,6-difluorophenyl acetate, 3,4-difluorophenyl acetate, 3,5-difluorophenyl acetate, 2,3,4-trifluorophenyl acetate, 2,3,5-trifluorophenyl acetate, 2,3,6-trifluorophenyl acetate, 2,4,5-trifluorophenyl acetate, 2,4,6-trifluorophenyl acetate, 3,4,5-trifluorophenyl acetate, and 2,3,4,5-tetrafluorophenyl acetate.

Preferred of these are 2-fluorophenyl acetate, 3-fluorophenyl acetate, 4-fluorophenyl acetate, 2,4-difluorophenyl acetate, 2,5-difluorophenyl acetate, 2,6-difluorophenyl acetate, 3,4-difluorophenyl acetate, 3,5-difluorophenyl acetate, 2,3,4-trifluorophenyl acetate, 2,3,5-trifluorophenyl acetate, 2,3,6-trifluorophenyl acetate, 2,4,6-trifluorophenyl acetate, and 2,3,4,5-tetrafluorophenyl acetate. More preferred are 2-fluorophenyl acetate, 3-fluorophenyl acetate, 4-fluorophenyl acetate, 2,4-difluorophenyl acetate, 3,4-difluorophenyl acetate, and 2,3,4-trifluorophenyl acetate.

Examples of the fluorine-substituted alkylphenyl acetates include 2-trifluoromethylphenyl acetate, 3-trifluoromethylphenyl acetate, 4-trifluoromethylphenyl acetate, 2,3-bis(trifluoromethyl)phenyl acetate, 2,4-bis(trifluoromethyl)phenyl acetate, 2,5-bis(trifluoromethyl)phenyl acetate, 2,6-bis(trifluoromethyl)phenyl acetate, 3,4-bis(trifluoromethyl) phenyl acetate, and 3,5-bis(trifluoromethyl)phenyl acetate.

Preferred of these are 2-trifluoromethylphenyl acetate, 3-trifluoromethylphenyl acetate, and 4-trifluoromethylphenyl acetate.

Examples of the fluorine-substituted phenyl propionates include 2-fluorophenyl propionate, 3-fluorophenyl propionate, 4-fluorophenyl propionate, 2,3-difluorophenyl propionate, 2,4-difluorophenyl propionate, 2,5-difluorophenyl propionate, 2,6-difluorophenyl propionate, 3,4-difluorophenyl propionate, 3,5-difluorophenyl propionate, 2,3,4-trifluorophenyl propionate, 2,3,5-trifluorophenyl propionate, 2,3,6-trifluorophenyl propionate, 2,4,5-trifluorophenyl propionate, 2,4,6-trifluorophenyl propionate, 3,4,5-trifluorophenyl propionate, and 2,3,4,5-tetrafluorophenyl propionate.

Preferred of these are 2-fluorophenyl propionate, 3-fluorophenyl propionate, 4-fluorophenyl propionate, 2,4-difluorophenyl propionate, 2,5-difluorophenyl propionate, 2,6-difluorophenyl propionate, 3,4-difluorophenyl propionate, 3,5-difluorophenyl propionate, 2,3,4-trifluorophenyl propionate, 2,3,5-trifluorophenyl propionate, 2,3,6-trifluorophenyl propionate, 2,4,6-trifluorophenyl propionate, and 2,3,4,5-tetrafluorophenyl propionate.

Examples of the fluorine-substituted alkylphenyl propionates include 2-trifluoromethylphenyl propionate, 3-trifluoromethylphenyl propionate, 4-trifluoromethylphenyl propionate, 2,3-bis(trifluoromethyl)phenyl propionate, 2,4-bis (trifluoromethyl)phenyl propionate, 2,5-bis(trifluoromethyl)phenyl propionate, 2,6-bis(trifluoromethyl)phenyl propionate, 3,4-bis(trifluoromethyl)phenyl propionate, and 3,5-bis(trifluoromethyl)phenyl propionate.

Examples of the fluorine-substituted phenyl butyrates include 2-fluorophenyl butyrate, 3-fluorophenyl butyrate, 4-fluorophenyl butyrate, 2,3-difluorophenyl butyrate, 2,4-difluorophenyl butyrate, 2,5-difluorophenyl butyrate, 2,6-difluorophenyl butyrate, 3,4-difluorophenyl butyrate, 3,5-difluorophenyl butyrate, 2,3,4-trifluorophenyl butyrate, 2,3,5-trifluorophenyl butyrate, 2,3,6-trifluorophenyl butyrate, 2,4,5-trifluorophenyl butyrate, 2,4,6-trifluorophenyl butyrate, 3,4,5-trifluorophenyl butyrate, and 2,3,4,5-tetrafluorophenyl butyrate.

Examples of the fluorine-substituted phenyl benzoates include 2-fluorophenyl benzoate, 3-fluorophenyl benzoate, 4-fluorophenyl benzoate, 2,3-difluorophenyl benzoate, 2,4-difluorophenyl benzoate, 2,5-difluorophenyl benzoate, 2,6-difluorophenyl benzoate, 3,4-difluorophenyl benzoate, 3,5-difluorophenyl benzoate, 2,3,4-trifluorophenyl benzoate, 2,3,5-trifluorophenyl benzoate, 2,3,6-trifluorophenyl benzoate, 2,4,5-trifluorophenyl benzoate, 2,4,6-trifluorophenyl benzoate, 3,4,5-trifluorophenyl benzoate, and 2,3,4,5-tetrafluorophenyl benzoate.

Examples of the fluorine-substituted phenyl acrylates include 2-fluorophenyl acrylate, 3-fluorophenyl acrylate, 4-fluorophenyl acrylate, 2,3-difluorophenyl acrylate, 2,4-difluorophenyl acrylate, 2,5-difluorophenyl acrylate, 2,6-difluorophenyl acrylate, 3,4-difluorophenyl acrylate, 3,5-difluorophenyl acrylate, 2,3,4-trifluorophenyl acrylate, 2,3,5-trifluorophenyl acrylate, 2,3,6-trifluorophenyl acrylate, 2,4,5-trifluorophenyl acrylate, 2,4,6-trifluorophenyl acrylate, 3,4,5-trifluorophenyl acrylate, and 2,3,4,5-tetrafluorophenyl acrylate.

Examples of the fluorine-substituted phenyl difluoroacetates include 2-fluorophenyl difluoroacetate, 3-fluorophenyl difluoroacetate, 4-fluorophenyl difluoroacetate, 2,3-difluorophenyl difluoroacetate, 2,4-difluorophenyl difluoroacetate, 2,5-difluorophenyl difluoroacetate, 2,6-difluorophenyl difluoroacetate, 3,4-difluorophenyl difluoroacetate, 3,5-difluorophenyl difluoroacetate, 2,3,4-trifluorophenyl difluoroacetate, 2,3,5-trifluorophenyl difluoroacetate, 2,3,6-trifluorophenyl difluoroacetate, 2,4,5-trifluorophenyl difluoroacetate, 2,4,6-trifluorophenyl difluoroacetate, 3,4,5-trifluorophenyl difluoroacetate, and 2,3,4,5-tetrafluorophenyl difluoroacetate.

Examples of the fluorine-substituted phenyl trifluoroacetates include 2-fluorophenyl trifluoroacetate, 3-fluorophenyl trifluoroacetate, 4-fluorophenyl trifluoroacetate, 2,3-difluorophenyl trifluoroacetate, 2,4-difluorophenyl trifluoroacetate, 2,5-difluorophenyl trifluoroacetate, 2,6-difluorophenyl trifluoroacetate, 3,4-difluorophenyl trifluoroacetate, 3,5-difluorophenyl trifluoroacetate, 2,3,4-trifluorophenyl trifluoroacetate, 2,3,5-trifluorophenyl trifluoroacetate, 2,3,6-trifluorophenyl trifluoroacetate, 2,4,5-trifluorophenyl trifluoroacetate, 2,4,6-trifluorophenyl trifluoroacetate, 3,4,5-trifluorophenyl trifluoroacetate, and 2,3,4,5-tetrafluorophenyl trifluoroacetate.

Preferred of these are 2-fluorophenyl trifluoroacetate, 3-fluorophenyl trifluoroacetate, 4-fluorophenyl trifluoroacetate, 2,3-difluorophenyl trifluoroacetate, 2,4-difluorophenyl trifluoroacetate, 2,5-difluorophenyl trifluoroacetate, 2,6-difluorophenyl trifluoroacetate, 3,4-difluorophenyl trifluoroacetate, 3,5-difluorophenyl trifluoroacetate, 2,3,4-trifluorophenyl trifluoroacetate, 2,3,5-trifluorophenyl trifluoroacetate, 2,3,6-trifluorophenyl trifluoroacetate, 2,4,5-trifluorophenyl trifluoroacetate, 2,4,6-trifluorophenyl trifluoroacetate, 3,4,5-trifluorophenyl trifluoroacetate, and 2,3,4,5-tetrafluorophenyl trifluoroacetate.

Examples of the fluorine-substituted phenyl pentafluoropropionates include 2-fluorophenyl pentafluoropropionate, 3-fluorophenyl pentafluoropropionate, 4-fluorophenyl pentafluoropropionate, 2,3-difluorophenyl pentafluoropropionate, 2,4-difluorophenyl pentafluoropropionate, 2,5-difluorophenyl pentafluoropropionate, 2,6-difluorophenyl pentafluoropropionate, 3,4-difluorophenyl pentafluoropropionate, 3,5-difluorophenyl pentafluoropropionate, 2,3,4-trifluorophenyl pentafluoropropionate, 2,3,5-trifluorophenyl pentafluoropropionate, 2,3,6-trifluorophenyl pentafluoropropionate, 2,4,5-trifluorophenyl pentafluoropropionate, 2,4,6-trifluorophenyl pentafluoropropionate, 3,4,5-trifluorophenyl pentafluoropropionate, and 2.3,4,5-tetrafluorophenyl pentafluoropropionate.

One of the fluorine-substituted aromatic ester compounds described above may be used alone, or two or more

thereof may be used in any desired combination and proportion.

[1-2. Composition]

The amount of the fluorine-substituted aromatic ester compound to be added, based on the weight of the whole nonaqueous electrolytic solution, is usually preferably 0.01% by weight or more, more preferably 0.1% by weight or more, even more preferably 0.3% by weight or more, especially preferably 1% by weight or more, most preferably 2% by weight or more. The amount thereof is usually preferably 10% by weight or less, more preferably 7% by weight or less, even more preferably 5% by weight or less, especially preferably 4% by weight or less.

By regulating the addition amount of the fluorine-substituted aromatic ester compound based on the nonaqueous electrolytic solution to a value not larger than the upper limit, it is possible to make the nonaqueous electrolytic solution give a battery which shows excellent high-temperature storability, is inhibited from evolving a gas during ordinary use, and has an improved capacity retention. By regulating the addition amount thereof to a value not less than the lower limit, the effects of the invention can be sufficiently produced.

[2. Nonaqueous Organic Solvent]

[2-1. Saturated Cyclic Carbonates]

The saturated cyclic carbonates usable in the invention can be selected at will so long as the carbonates are cyclic carbonates which have no carbon-carbon unsaturated bond and which do not considerably lessen the effects of the invention.

Examples of the saturated cyclic carbonates include: carbonates such as ethylene carbonate, propylene carbonate, butylene carbonate, dimethylethylene carbonate, diethylethylene carbonate, monopropylethylene carbonate, dipropylethylene carbonate, phenylethylene carbonate, diphenylethylene carbonate, and catechol carbonate; and halogen-substituted carbonates such as monofluoroethylene carbonate, difluoroethylene carbonate, trifluoroethylene carbonate, tetrafluoroethylene carbonate, monofluoromethylethylene carbonate, trifluoromethylethylene carbonate, monochloroethylene carbonate, dichloroethylene carbonate, trichloroethylene carbonate, tetrachloroethylene carbonate, monochloromethylethylene carbonate, and trichloromethylethylene carbonate.

It is preferred that the saturated cyclic carbonates should be at least one member selected from the group consisting of ethylene carbonate, propylene carbonate, butylene carbonate, monofluoroethylene carbonate, and difluoroethylene carbonate among those carbonates. Furthermore, it is especially preferred that the saturated cyclic carbonates should be at least one member selected from the group consisting of ethylene carbonate, propylene carbonate, and monofluoroethylene carbonate, because such cyclic carbonates bring about improved storability.

[2-2. Linear carbonates]

The linear carbonates usable in the invention can be selected at will unless the carbonates considerably lessen the effects of the invention. Examples thereof include: carbonates such as dimethyl carbonate, ethyl methyl carbonate, diethyl carbonate, propyl methyl carbonate, dipropyl carbonate, methyl phenyl carbonate, ethyl phenyl carbonate, and diphenyl carbonate; and halogen-substituted carbonates such as bis(trifluoromethyl) carbonate, methyl trifluoromethyl carbonate, bis(monofluoroethyl) carbonate, methyl monofluoroethyl carbonate, bis(trifluoroethyl) carbonate, and methyl trifluoroethyl carbonate.

It is preferred that the linear carbonates should be at least one member selected from the group consisting of dimethyl carbonate, ethyl methyl carbonate, diethyl carbonate, methyl propyl carbonate, and ethyl propyl carbonate among those carbonates. Furthermore, it is especially preferred that the linear carbonates should be at least one member selected from the group consisting of dimethyl carbonate and ethyl methyl carbonate.

[2-3. Aliphatic Carboxylic Acid Esters]

The aliphatic carboxylic acid esters usable in the invention can be selected at will unless the esters considerably lessen the effects of the invention. However, it is especially preferred that the nonaqueous organic solvent should contain at least one member selected from compounds represented by the following general formula (2).

[Chem. 5]

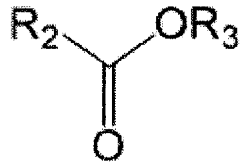

(2)

In general formula (2), $R_2$ is an alkyl group which has 1-4 carbon atoms and may have been substituted with a fluorine atom. $R_3$ is an alkyl group which has 1-4 carbon atoms and may have been substituted with a fluorine atom.
In general formula (2), $R_2$ is an alkyl group and may have been substituted with a fluorine atom. The number of carbon atoms of $R_2$ is generally 1-4, preferably 1-3, more preferably 1-2, most preferably 2. In case where the number of carbon atoms thereof is larger than 4, the nonaqueous electrolytic solution has an increased viscosity and there is a possibility that movement of lithium ions might be inhibited, resulting in impaired performance.
In the case where $R_2$ is an alkyl group, preferred examples thereof include methyl, ethyl, propyl, and butyl. More preferred of these are methyl, ethyl, and propyl.
Even more preferred are methyl and ethyl. Most preferred is ethyl.
In the case where $R_2$ is a fluorine-substituted alkyl group, preferred examples thereof include monofluoromethyl, difluoromethyl, trimethylfluoromethyl, 2,2,2-trifluoroethyl, pentafluoroethyl, and heptafluoropropyl.
Preferred of these are monofluoromethyl, difluoromethyl, trimethylfluoromethyl, 2,2,2-trifluoroethyl, and pentafluoroethyl. Most preferred are 2,2,2-trifluoroethyl and pentafluoroethyl.
In general formula (2), $R_3$ is an alkyl group and may have been substituted with a fluorine atom. The number of carbon atoms of $R_3$ is generally 1-4, preferably 1-3, more preferably 1-2. In case where the number of carbon atoms thereof is larger than 4, the nonaqueous electrolytic solution has an increased viscosity and there is a possibility that movement of lithium ions might be inhibited, resulting in impaired performance.
In the case where $R_3$ is an alkyl group, preferred examples thereof include methyl, ethyl, propyl, and butyl. More preferred of these are methyl, ethyl, and propyl. Even more preferred are methyl and ethyl.
In the case where $R_3$ is a fluorine-substituted alkyl group, preferred examples thereof include monofluoromethyl, difluoromethyl, trimethylfluoromethyl, 2,2,2-trifluoroethyl, pentafluoroethyl, and heptafluoropropyl. Preferred of these are monofluoromethyl, difluoromethyl, trimethylfluoromethyl, 2,2,2-trifluoroethyl, and pentafluoroethyl.
Specific examples of the compounds represented by general formula (2) include: aliphatic carboxylic acid esters such as methyl acetate, ethyl acetate, propyl acetate, methyl propionate, ethyl propionate, propyl propionate, methyl butyrate, ethyl butyrate, propyl butyrate, methyl isobutyrate, ethyl isobutyrate, and propyl isobutyrate; and fluorine-substituted aliphatic carboxylic acid esters such as methyl monofluoroacetate, methyl difluoroacetate, methyl trifluoroacetate, ethyl monofluoroacetate, ethyl difluoroacetate, ethyl trifluoroacetate, trifluoroethyl acetate, trifluoroethyl propionate, trifluoroethyl butyrate, and trifluoroethyl isobutyrate.
Preferred of these are methyl acetate, ethyl acetate, methyl propionate, ethyl propionate, methyl butyrate, ethyl butyrate, methyl isobutyrate, and ethyl isobutyrate. More preferred are methyl propionate, ethyl propionate, methyl butyrate, and ethyl butyrate. Most preferred are methyl propionate and ethyl propionate.

[2-4. Proportion]

The nonaqueous electrolytic solution of the invention contains a nonaqueous organic solvent which includes at least one member selected from the group consisting of saturated cyclic carbonates, linear carbonates, and aliphatic carboxylic acid esters, in a total proportion exceeding 90%. The fluorine-substituted aromatic ester compound described above and the film-forming agent and aids which will be described later are not included in the total of the nonaqueous organic solvent.
The total proportion thereof is usually desirably 91% or higher, preferably 93% or higher, more preferably 95% or higher, even more preferably 97% or higher, especially preferably 99% or higher, most preferably 100%.
It is preferred that a saturated cyclic carbonate should be used in combination with a linear carbonate or that a saturated cyclic carbonate be used in combination with an aliphatic carboxylic acid ester.
In the case where a saturated cyclic carbonate is used in combination with a linear carbonate, the proportion (volume ratio) of the saturated cyclic carbonate to the linear carbonate is usually preferably from 5:95 to 50:50, more preferably from 10:90 to 40:60, even more preferably from 15:85 to 35:55, from the standpoint of attaining both electrical

conductivity and suitability for infiltration into electrodes.

In the case where a saturated cyclic carbonate is used in combination with an aliphatic carboxylic acid ester, the proportion (volume ratio) of the saturated cyclic carbonate to the aliphatic carboxylic acid ester is usually preferably from 5:95 to 50:50, more preferably from 10:90 to 45:55, even more preferably from 15:85 to 40:60.

[2-5. Other Organic Solvents]

The nonaqueous electrolytic solution of the invention may contain solvents other than the cyclic carbonates and linear carbonates described above which have no carbon-carbon unsaturated bond, in an amount less than 10% by volume. Examples of the solvents include at least one member selected from the group consisting of γ-butyrolactone, α-methyl-γ-butyrolactone, δ-valerolactone, 1,2-dimethoxyethane, 1,2-diethoxyethane, diethyl ether, tetrahydrofuran, 2-methyltetrahydrofuran, 1,3-dioxolane, 4-methyl-1,3-dioxolane, N-methylpyrrolidone, N-ethylpyrrolidone, N-vinylpyrrolidone, sulfolane, dimethyl sulfoxide, acetonitrile, trimethyl phosphate, triethyl phosphate, fluorobenzene, 2,4-difluorobenzene, and trifluoromethylbenzene.

[3. Lithium Salt]

The lithium salt is used as an electrolyte. The kind of lithium salt is not particularly limited, and either an inorganic lithium salt or an organic lithium salt may be used.

Examples of the inorganic lithium salt include: inorganic fluoride salts such as $LiPF_6$, $LiAsF_6$, $LiBF_4$, and $LiSbF_6$; inorganic chloride salts such as $LiAlCl_4$; and perhalogen acid salts such as $LiClO_4$, $LiBrO_4$, and $LiIO_4$.

Examples of the organic lithium salt include: perfluoroalkanesulfonic acid salts such as $CF_3S0_3Li$ and $C_4F_9SO_3Li$; perfluoroalkanecarboxylic acid salts such as $CF_3COOLi$; perfluoroalkanecarboximide salts such as $(CF_3CO)_2NLi$; perfluoroalkanesulfonimide salts such as $(CF_3SO_2)_2NLi$ and $(C_2F_5SO_2)_2NLi$; and oxalic acid salts such as lithium bis(oxalato)borate (abbreviation: LiBOB) and lithium difluorooxalatoborate (abbreviation: LiFOB).

$LiPF_6$, $LiBF_4$, $CF_3S0_3Li$, and $(CF_3SO_2)_2NLi$ are preferred of those salts, because these salts readily dissolve in the nonaqueous organic solvent and show a high degree of dissociation.

One lithium salt may be used alone, or two or more lithium salts may be used in any desired combination and proportion. In particular, a combination of $LiPF_6$ and $LiBF_4$ and a combination of $LiPF_6$ and $(CF_3SO_2)_2NLi$ are preferred because these combinations are effective in improving continuous-charge characteristics.

The concentration of the lithium salt in the nonaqueous electrolytic solution is not limited unless the effects of the invention are considerably lessened. However, the concentration thereof in the nonaqueous electrolytic solution is usually preferably 0.5 mol/L or higher, more preferably 0.75 mol/L or higher, and is usually preferably 2 mol/L or lower, more preferably 1.75 mol/L or lower.

By regulating the concentration of the lithium salt to a value not less than the lower limit, the nonaqueous electrolytic solution is made to have a satisfactory electrical conductivity. On the other hand, by regulating the concentration of the lithium salt to a value not greater than the upper limit, not only the nonaqueous electrolytic solution is inhibited from increasing in viscosity and thereby prevented from decreasing in electrical conductivity, but also low-temperature precipitation is inhibited. Thus, the performance of lithium secondary batteries can be improved.

[4. Film-Forming Agent]

It is preferred that the nonaqueous electrolytic solution of the invention should further contain one member selected from unsaturated cyclic carbonates, monofluorophosphoric acid salts, difluorophosphoric acid salts, sultones, and sulfites, for the purpose of making the electrolytic solution form a coating film on the negative electrode to improve battery characteristics.

The unsaturated cyclic carbonates are not limited so long as the carbonates are cyclic carbonates having a carbon-carbon unsaturated bond, and any desired such carbonate can be used. Examples thereof include: vinylene carbonate and vinylene carbonate derivatives such as methylvinylene carbonate, 1,2-dimethylvinylene carbonate, phenylvinylene carbonate, 1,2-diphenylvinylene carbonate, fluorovinylene carbonate, 1,2-difluorovinylene carbonate, l -fluoro-2-methylvinylene carbonate, and 1-fluoro-2-phenylvinylene carbonate; and vinylethylene carbonate and vinylethylene carbonate derivatives such as 1,1-divinylethylene carbonate, 1,2-divinylethylene carbonate, 1-methyl-2-vinylethylene carbonate, 1-phenyl-2-vinylethylene carbonate, and 1-fluoro-2-vinylethylene carbonate.

Preferred of these are: vinylene carbonate and vinylene carbonate derivatives such as methylvinylene carbonate and 1,2-dimethylvinylene carbonate; and vinylethylene carbonate and vinylethylene carbonate derivatives such as 1,2-divinylethylene carbonate. Especially preferred are vinylene carbonate and vinylethylene carbonate.

One of such unsaturated cyclic carbonates may be used alone, or two or more thereof may be used in any desired combination and proportion.

The number of carbon atoms of each of the unsaturated cyclic carbonates is usually preferably 3 or more, and is usually preferably 20 or less, more preferably 15 or less. Unsaturated cyclic carbonates having carbon atoms in a number not larger than the upper limit of that range show sufficient solubility in the electrolytic solution.

The unsaturated cyclic carbonates each have a molecular weight which is usually preferably 80 or higher, and is usually preferably 250 or lower, more preferably 150 or lower. Unsaturated cyclic carbonates having a molecular weight not higher than the upper limit of that range show sufficient solubility in the electrolytic solution. Thus, the effect of improving high-temperature storability according to the invention can be sufficiently produced.

The concentration of unsaturated cyclic carbonates, based on the whole electrolytic solution, is usually preferably 0.01% by weight or higher, more preferably 0.1% by weight or higher, even more preferably 0.3% by weight or higher, and is usually preferably 10% by weight or lower, more preferably 7% by weight or lower, even more preferably 5% by weight or lower, especially preferably 3% by weight or lower.

By regulating the concentration of unsaturated cyclic carbonates to a value not higher than the upper limit, it is possible to make the nonaqueous electrolytic solution give a battery which shows excellent high-temperature storability, is inhibited from evolving a gas during use, and has an improved capacity retention. By regulating the concentration of saturated cyclic carbonates to a value not less than the lower limit, the effects of the invention can be sufficiently produced. In the case where two or more unsaturated cyclic carbonates are used in combination, it is preferred to regulate the total concentration thereof so as to be within that range.

Preferred monofluorophosphoric acid salts are sodium monofluorophosphate, lithium monofluorophosphate, and potassium monofluorophosphate. Especially preferred is lithium monofluorophosphate.

Preferred difluorophosphoric acid salts are sodium difluorophosphate, lithium difluorophosphate, and potassium difluorophosphate. Especially preferred is lithium difluorophosphate.

The total concentration of monofluorophosphoric acid salts and difluorophosphoric acid salts, based on the whole nonaqueous electrolytic solution, is usually preferably 0.01 % by weight or higher, more preferably 0.1 % by weight or higher, even more preferably 0.2% by weight or higher, and is usually preferably 10% by weight or lower, more preferably 3% by weight or lower, even more preferably 2% by weight or lower, especially preferably 1% by weight or lower.

By regulating the concentration of monofluorophosphoric acid salts and difluorophosphoric acid salts to a value not higher than the upper limit, resistance to negative-electrode reactions can be inhibited and a capacity improvement can be attained. By regulating the concentration of monofluorophosphoric acid salts and difluorophosphoric acid salts to a value not lower than the lower limit, the effects of the invention can be sufficiently produced.

Preferred sultones are 1,3-propanesultone, 1,3-propenesultone, and 1,4-butanesultone. Especially preferred are 1,3-propanesultone and 1,3-propenesultone.

The total concentration of sultones, based on the whole electrolytic solution, is usually preferably 0.01 % by weight or higher, more preferably 0.2% by weight or higher, even more preferably 0.5% by weight or higher, and is usually preferably 10% by weight or lower, more preferably 5% by weight or lower, even more preferably 3% by weight or lower, especially preferably 2% by weight or lower.

By regulating the concentration of sultones to a value not higher than the upper limit, resistance to negative-electrode reactions can be inhibited and a capacity improvement can be attained. By regulating the concentration of sultones to a value not lower than the lower limit, the effects of the invention can be sufficiently produced.

Preferred sulfites are dimethyl sulfite, ethyl methyl sulfite, diethyl sulfite, ethylene sulfite, and propylene sulfite. Especially preferred are ethylene sulfite and propylene sulfite.

The total concentration of sulfites, based on the whole electrolytic solution, is usually preferably 0.01 % by weight or higher, more preferably 0.2% by weight or higher, even more preferably 0.5% by weight or higher, and is usually preferably 10% by weight or lower, more preferably 5% by weight or lower, even more preferably 3% by weight or lower, especially preferably 2% by weight or lower.

By regulating the total concentration of sulfites to a value not higher than the upper limit, high-temperature storability can be improved. By regulating the concentration of sulfites to a value not lower than the lower limit, the effects of the invention can be sufficiently produced.

[5. Other Aids]

For the purpose of improving the wetting properties, overcharge characteristics, and other properties of the nonaqueous electrolytic solution of the invention, other aids may be incorporated into the nonaqueous electrolytic solution so long as the incorporation thereof does not considerably lessen the effects of the invention.

Examples of the aids include: acid anhydrides such as maleic anhydride, succinic anhydride, and glutaric anhydride; sulfur-containing compounds such as diphenyl disulfide, dimethyl sulfone, divinyl sulfone, 1,4-butanediol dimethanesulfonate, methyl methanesulfonate, and 2-propyl methanesulfonate; and aromatic compounds such as t-butylbenzene, t-amylbenzene, biphenyl, o-terphenyl, 4-fluorobiphenyl, cyclohexylbenzene, diphenyl ether, and 2,4-difluoroanisole and compounds formed by substituting these aromatic compounds with one or more fluorine atoms. One

aid may be used alone, or two or more aids may be used in any desired combination and proportion.

The concentration of aids in the nonaqueous electrolytic solution is usually preferably 0.01 % by weight or higher, more preferably 0.05% by weight or higher, and is usually preferably 5% by weight or lower, more preferably 3% by weight or lower.

In the case where two or more aids are used in combination, it is preferred to regulate the total concentration of these so as to be within that range. Incidentally, such other aids are not included in the constituted elements of the nonaqueous electrolytic solution.

[6. State of the Nonaqueous Electrolytic Solution]

The nonaqueous electrolytic solution of the invention is usually present in a liquid state when used in the lithium secondary battery of the invention. However, this electrolytic solution may be caused to gel with, for example, a polymer and thereby converted to a semisolid electrolyte.

Any desired polymer may be used for the gelation. Examples thereof include poly(vinylidene fluoride), copolymers of poly(vinylidene fluoride) and hexafluoropropylene, poly(ethylene oxide), polyacrylates, and polymethacrylates.

One polymer for gelation may be used alone, or two or more polymers for gelation may be used in any desired combination and proportion.

In the case where the nonaqueous electrolytic solution is used as a semisolid electrolyte, the proportion of the nonaqueous electrolytic solution in the semisolid electrolyte is not limited unless the effects of the invention are considerably lessened.

The proportion of the nonaqueous electrolytic solution to the total amount of the semisolid electrolyte is usually preferably 30% by weight or higher, more preferably 50% by weight or higher, even more preferably 75% by weight or higher, and is usually preferably 99.95% by weight or less, more preferably 99% by weight or less, even more preferably 98% by weight or less.

By regulating the proportion of the nonaqueous electrolytic solution so as to be not higher than the upper limit, the electrolytic solution is rendered easy to hold and liquid leakage is made less apt to occur. By regulating the proportion of the nonaqueous electrolytic solution so as to be not lower than the lower limit, sufficient charge/discharge efficiency and capacity can be obtained.

[7. Process for Producing the Nonaqueous Electrolytic Solution]

Processes for producing the nonaqueous electrolytic solution of the invention are not particularly limited. For example, the electrolytic solution can be prepared by adding a lithium salt to a nonaqueous organic solvent which includes a cyclic carbonate having no carbon-carbon unsaturated bond and/or a linear carbonate so that the total proportion thereof is 95% by volume or higher and further adding the fluorine-substituted aromatic ester compound according to the invention in an amount of 0.01-10% by weight based on the weight of the nonaqueous electrolytic solution.

It is preferred that prior to the preparation of the nonaqueous electrolytic solution, the ingredients for the nonaqueous electrolytic solution, i.e., the lithium salt, nonaqueous solvent, fluorine-substituted aromatic ester compound, and other aids, should be dehydrated beforehand.

With respect to the degree of dehydration, it is preferred to dehydrate the ingredients to a moisture content of generally 50 ppm or less, preferably 30 ppm or less. In this description, ppm means proportion by weight.

In case where water is present in the nonaqueous electrolytic solution, there is a possibility that electrolysis of water, reaction of water with lithium metal, hydrolysis of the lithium salt, and the like might occur. The presence of water is hence undesirable.

Techniques for the dehydration are not particularly limited. For example, in the case where the ingredient to be dehydrated is a liquid, e.g., the nonaqueous solvent, use may be made of a molecular sieve or the like. In the case where the ingredient to be dehydrated is a solid, e.g., an electrolyte, the solid ingredient may be dried at a temperature lower than the temperatures at which decomposition occurs.

[8. Mechanism]

The mechanism by which the nonaqueous electrolytic solution of the invention brings about effects is unclear. However, the mechanism is thought to be as follows.

During the initial charge conducted for battery production, part of the fluorine-substituted aromatic ester compound contained in the nonaqueous electrolytic solution of the invention is reduced to form a protective coating film on the negative electrode. The protective coating film is highly thermally stable to carbonate solvents. Consequently, in the case of nonaqueous electrolytic solutions in which the nonaqueous organic solvent consists mainly of one or more carbonates and/or one or more aliphatic carboxylic acid esters as in the invention, the storability of the battery is improved.

As disclosed in JP-A-2003-282055, in the case where the nonaqueous organic solvent in an electrolytic solution includes a large proportion of one or more solvent compounds which are neither carbonates nor aliphatic carboxylic acid esters, the protective coating film is apt to dissolve in the nonaqueous organic solvent and solvent decomposition reactions come to proceed on the negative electrode, resulting in impaired storability.

In addition, when the battery comes into an overcharged state, the fluorine-substituted aromatic ester compound according to the invention decomposes on the positive electrode in an early stage in the overcharge to evolve a gas such as carbon dioxide while generating hydrogen fluoride and/or an oxidation reaction product. Furthermore, the hydrogen fluoride and/or oxidation reaction product generated here functions as a catalyst to decompose the carbonate solvent and/or the aliphatic carboxylic acid ester solvent and thereby evolve carbon dioxide gas.

Consequently, in the case of nonaqueous electrolytic solutions in which the nonaqueous organic solvent consists mainly of one or more carbonates and/or one or more aliphatic carboxylic acid esters as in the invention, a gas is evolved in a large amount in the initial stage in overcharge (voltage, 5 V). Because of this, in batteries equipped with a device which detects the internal pressure and breaks the electric current, it is possible to stop current supply in a safer stage and, hence, the overcharge does not result in smoking or firing.

On the other hand, in the case where the nonaqueous organic solvent in an electrolytic solution includes a large proportion of one or more solvent compounds which are neither carbonates nor aliphatic carboxylic acid esters, as disclosed in JP-A-2003-282055, the protective coating film on the negative electrode which was described above dissolves by the influence of the Joule's heat resulting from overcharge and the dissolved material of the coating film moves to the positive electrode and is oxidized thereon to form a protective coating film and thereby inhibit the fluorine-substituted aromatic ester compound from decomposing. Thus, a gas is evolved in an insufficient amount.

Next, another aspect (aspect II) of the nonaqueous electrolytic solutions of the invention is explained.

[II. Nonaqueous Electrolytic Solution]

This nonaqueous electrolytic solution of the invention usually includes, as main components thereof, an electrolyte and a nonaqueous solvent in which the electrolyte has been dissolved, like general nonaqueous electrolytic solutions, and further contains a compound represented by general formula (3).

[Chem. 6]

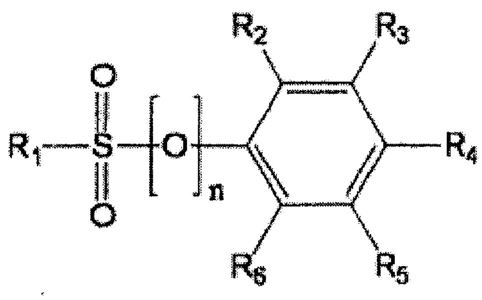

(3)

In general formula (3), $R_1$ represents a hydrocarbon group which has 1-12 carbon atoms and may have been substituted with a fluorine atom, and $R_2$ to $R_6$ each independently represent a hydrogen atom, a fluorine atom, or an alkyl group which has 1-12 carbon atoms and may have been substituted with a fluorine atom, at least one of $R_2$ to $R_6$ representing an alkyl group which has 2 or more carbon atoms and may have been substituted with a fluorine atom. Symbol n represents an integer of 0 or 1. When n is 1, at least one of $R_2$ to $R_6$ represents an alkyl group which has 5 or more carbon atoms and may have been substituted with a fluorine atom.

[1. Compound of General Formula (3)]

[1-1. Kind]

Examples of the hydrocarbon group represented by $R_1$ in general formula (3), which has 1-12 carbon atoms and may have been substituted with a fluorine atom, include alkyl groups having 1-12 carbon atoms, alkenyl groups

having 2-12 carbon atoms, aryl groups having 6-12 carbon atoms, and aralkyl groups having 7-12 carbon atoms.

Examples of the alkyl groups having 1-12 carbon atoms include methyl, ethyl, n-propyl, isopropyl, n-butyl, isobutyl, sec-butyl, t-butyl, pentyl, cyclopentyl, and cyclohexyl.

The number of carbon atoms of each of the alkyl groups is 1-12, preferably 1-6, more preferably 1-4. The alkyl groups preferably are chain or cyclic alkyl groups, and more preferably are chain alkyl groups.

Examples of the alkenyl groups having 2-12 carbon atoms include vinyl and propenyl. The number of carbon atoms of each of the alkenyl groups is 2-12, preferably 2-8, more preferably 2-4.

Examples of the aryl groups having 6-12 carbon atoms include phenyl, tolyl, xylyl, cyclohexylphenyl, and t-butylphenyl. Preferred of these are phenyl, cyclohexylphenyl, and t-butylphenyl.

Examples of the aralkyl groups having 7-12 carbon atoms include benzyl and phenethyl. Preferred of these is benzyl.

The alkyl groups, alkenyl groups, aryl groups, and aralkyl groups may have been substituted with a fluorine atom.

Examples of the fluorine-substituted alkyl groups include fluorinated alkyl groups such as trifluoromethyl, trifluoroethyl, and pentafluoroethyl, and 2-fluorovinyl and 3-fluoro-2-propenyl.

Examples of the fluorine-substituted aryl groups include fluorinated aryl groups such as 2-fluorophenyl, 3-fluorophenyl, and 4-fluorophenyl.

Examples of the fluorine-substituted aralkyl groups include 2-fluorobenzyl, 3-fluorobenzyl, and 4-fluorobenzyl.

It is preferred that $R_1$ should be a group selected from the group consisting of methyl, ethyl, vinyl, phenyl, and trifluoromethyl. More preferably, $R_1$ is a group selected from the group consisting of methyl, ethyl, and trifluoromethyl.

Examples of the alkyl groups represented by $R_2$ to $R_6$ in general formula (I), which each have 1-12 carbon atoms and may have been substituted with a fluorine atom, include methyl, ethyl, n-propyl, isopropyl, n-butyl, isobutyl, sec-butyl, t-butyl, n-pentyl, t-amyl, n-hexyl, 1,1-dimethylbutyl, cyclobutyl, cyclopentyl, cyclohexyl, 1-methylcyclohexyl, and 1-ethylcyclohexyl. Preferred of these are the chain or cyclic alkyl groups having 1-6 carbon atoms.

Examples of the fluorine-substituted groups include trifluoromethyl, trifluoroethyl, and pentafluoroethyl.

It is more preferred that in general formula (3), $R_2$ to $R_6$ each should independently be a hydrogen atom or an alkyl group which has 2-6 carbon atoms and may have been substituted with a fluorine atom. When n in general formula (3) is 0, at least one of $R_2$ to $R_6$ represents an alkyl group having 2 or more carbon atoms. When n is 1, at least one of $R_2$ to $R_6$ represents an alkyl group having 5 or more carbon atoms.

From the standpoints of improving safety during overcharge and improving battery characteristics, at least one of$R_2$ to $R_6$ preferably is an alkyl group having 3 or more carbon atoms, more preferably is an alkyl group having 4 or more carbon atoms, and even more preferably is an alkyl group having 5 or more carbon atoms. The alkyl group may have been substituted with a fluorine atom.

Examples of the alkyl group having 4 or more carbon atoms include n-butyl, isobutyl, sec-butyl, t-butyl, n-pentyl, t-amyl, n-hexyl, 1,1-dimethylbutyl, cyclobutyl, cyclopentyl, cyclohexyl, 1-methylcyclohexyl, and 1-ethylcyclohexyl.

Preferred alkyl groups having 4 or more carbon atoms are secondary alkyl groups and tertiary alkyl groups. More preferred of these are sec-butyl, t-butyl, t-amyl, 1,1-dimethylbutyl, cyclopentyl, cyclohexyl, 1-methylcyclohexyl, and 1-ethylcyclohexyl. Even more preferred are t-butyl, t-amyl, 1,1-dimethylbutyl, cyclopentyl, cyclohexyl, 1-methylcyclohexyl, and 1-ethylcyclohexyl. Especially preferred are t-amyl, 1,1-dimethylbutyl, cyclopentyl, cyclohexyl, 1-methylcyclohexyl, and 1-ethylcyclohexyl, which are secondary or tertiary alkyl groups having 5 or more carbon atoms.

Examples of the compound represented by general formula (3) include the following compounds.

(Compounds in which n=1)

Examples of compounds in which n=1 include compounds in which $R_1$ is an alkyl group having 1-12 carbon atoms, compounds in which $R_1$ is an alkenyl group having 2-12 carbon atoms, compounds in which $R_1$ is an aryl group having 6-12 carbon atoms, compounds in which $R_1$ is an aralkyl group having 7-12 carbon atoms, and compounds in which $R_1$ is a fluorine-substituted alkyl group having 1-12 carbon atoms.

Examples of the compounds in which $R_1$is an alkyl group having 1-12 carbon atoms include 2-n-pentylphenyl methanesulfonate, 3-n-pentylphenyl methanesulfonate, 4-n-pentylphenyl methanesulfonate, 2,4-di-n-pentylphenyl methanesulfonate, 3,5-di-n-pentylphenyl methanesulfonate, 2-t-amylphenyl methanesulfonate, 3-t-amylphenyl methanesulfonate, 4-t-amylphenyl methanesulfonate, 2,4-di-t-amylphenyl methanesulfonate, 3,5-di-t-amylphenyl methanesulfonate, 2-cyclopentylphenyl methanesulfonate, 3-cyclopentylphenyl methanesulfonate, 4-cyclopentylphenyl methanesulfonate, 2-cyclohexylphenyl methanesulfonate, 3-cyclohexylphenyl methanesulfonate, 4-cyclohexylphenyl methanesulfonate, 2-n-pentylphenyl ethanesulfonate, 3-n-pentylphenyl ethanesulfonate, 4-n-pentylphenyl ethanesulfonate, 2,4-di-n-pentylphenyl ethanesulfonate, 3,5-di-n-pentylphenyl ethanesulfonate, 2-t-amylphenyl ethanesulfonate, 3-t-amylphenyl ethanesulfonate, 4-t-amylphenyl ethanesulfonate, 2-cyclopentylphenyl ethanesulfonate, 3-cyclopentylphenyl ethanesulfonate, 4-cyclopentylphenyl ethanesulfonate, 2-cyclohexylphenyl ethanesulfonate, 3-cyclohexylphenyl ethanesulfonate, 4-cyclohexylphenyl ethanesulfonate, 2-n-pentylphenyl propanesulfonate, 3-n-pentylphenyl propanesulfonate, 4-n-pentylphenyl propanesulfonate, 2,4-di-n-pentylphenyl propanesulfonate, 3,5-di-n-pentylphenyl propanesulfonate, 2-t-amylphenyl propanesulfonate, 3-t-amylphenyl propanesulfonate, 4-t-amylphenyl propanesulfonate, 2-cyclopentylphenyl propanesulfonate, 3-cyclopentylphenyl propanesulfonate, 4-cyclopentylphenyl propanesulfonate, 2-cyclohexylphenyl propanesulfonate, 3-cyclohexylphenyl propanesulfonate, and 4-cyclohexylphenyl propanesulfonate.

Examples of the compounds in which $R_1$ is an alkenyl group having 2-12 carbon atoms include 2-n-pentylphenyl vinylsulfonate, 3-n-pentylphenyl vinylsulfonate, 4-n-pentylphenyl vinylsulfonate, 2,4-di-n-pentylphenyl vinylsulfonate, 3,5-di-n-pentylphenyl vinylsulfonate, 2-t-amylphenyl vinylsulfonate, 3-t-amylphenyl vinylsulfonate, 4-t-amylphenyl vinylsulfonate, 2-cyclopentylphenyl vinylsulfonate, 3-cyclopentylphenyl vinylsulfonate, 4-cyclopentylphenyl vinylsulfonate, 2-cyclohexylphenyl vinylsulfonate, 3-cyclohexylphenyl vinylsulfonate, 4-cyclohexylphenyl vinylsulfonate, 2-n-pentylphenyl allylsulfonate, 3-n-pentylphenyl allylsulfonate, 4-n-pentylphenyl allylsulfonate, 2,4-di-n-pentylphenyl allylsulfonate, 3,5-di-n-pentylphenyl allylsulfonate, 2-t-amylphenyl allylsulfonate, 3-t-amylphenyl allylsulfonate, 4-t-amylphenyl allylsulfonate, 2-cyclopentylphenyl allylsulfonate, 3-cyclopentylphenyl allylsulfonate, 4-cyclopentylphenyl allylsulfonate, 2-cyclohexylphenyl allyl sulfonate, 3-cyclohexylphenyl allylsulfonate, and 4-cyclohexylphenyl allylsulfonate.

Examples of the compounds in which $R_1$ is an aryl group having 6-12 carbon atoms include 2-n-pentylphenyl benzenesulfonate, 3-n-pentylphenyl benzenesulfonate, 4-n-pentylphenyl benzenesulfonate, 2,4-di-n-pentylphenyl benzenesulfonate, 3,5-di-n-pentylphenyl benzenesulfonate, 2-t-amylphenyl benzenesulfonate, 3-t-amylphenyl benzenesulfonate, 4-t-amylphenyl benzenesulfonate, 2-cyclopentylphenyl benzenesulfonate, 3-cyclopentylphenyl benzenesulfonate, 4-cyclopentylphenyl benzenesulfonate, 2-cyclohexylphenyl benzenesulfonate, 3-cyclohexylphenyl benzenesulfonate, 4-cyclohexylphenyl benzenesulfonate, 2-n-pentylphenyl p-toluenesulfonate, 3-n-pentylphenyl p-toluenesulfonate, 4-n-pentylphenyl p-toluenesulfonate, 2,4-di-n-pentylphenyl p-toluenesulfonate, 3,5-di-n-pentylphenyl p-toluenesulfonate, 2-t-amylphenyl p-toluenesulfonate, 3-t-amylphenyl p-toluenesulfonate, 4-t-amylphenyl p-toluenesulfonate, 2-cyclopentylphenyl p-toluenesulfonate, 3-cyclopentylphenyl p-toluenesulfonate, 4-cyclopentylphenyl p-toluenesulfonate, 2-cyclohexylphenyl p-toluenesulfonate, 3-cyclohexylphenyl p-toluenesulfonate, and 4-cyclohexylphenyl p-toluenesulfonate.

Examples of the compounds in which $R_1$ is an aralkyl group having 7-12 carbon atoms include 2-n-pentylphenyl benzylsulfonate, 3-n-pentylphenyl benzylsulfonate, 4-n-pentylphenyl benzylsulfonate, 2,4-di-n-pentylphenyl benzylsulfonate, 3,5-di-n-pentylphenyl benzylsulfonate, 2-t-amylphenyl benzylsulfonate, 3-t-amylphenyl benzylsulfonate, 4-t-amylphenyl benzylsulfonate, 2-cyclopentylphenyl benzylsulfonate, 3-cyclopentylphenyl benzylsulfonate, 4-cyclopentylphenyl benzylsulfonate, 2-cyclohexylphenyl benzylsulfonate, 3-cyclohexylphenyl benzylsulfonate, and 4-cyclohexylphenyl benzylsulfonate.

Examples of the compounds in which $R_1$ is a fluorine-substituted alkyl group having 1-12 carbon atoms include 2-n-pentylphenyl trifluoromethanesulfonate, 3-n-pentylphenyl trifluoromethanesulfonate, 4-n-pentylphenyl trifluoromethanesulfonate, 2,4-di-n-pentylphenyl trifluoromethanesulfonate, 3,5-di-n-pentylphenyl trifluoromethanesulfonate, 2-t-amylphenyl trifluoromethanesulfonate, 3-t-amylphenyl trifluoromethanesulfonate, 4-t-amylphenyl trifluoromethanesulfonate, 2-cyclopentylphenyl trifluoromethanesulfonate, 3-cyclopentylphenyl trifluoromethanesulfonate, 4-cyclopentylphenyl trifluoromethanesulfonate, 2-cyclohexylphenyl trifluoromethanesulfonate, 3-cyclohexylphenyl trifluoromethanesulfonate, 4-cyclohexylphenyl trifluoromethanesulfonate, 2-n-pentylphenyl trifluoroethanesulfonate, 3-n-pentylphenyl trifluoroethanesulfonate, 4-n-pentylphenyl trifluoroethanesulfonate, 2,4-di-n-pentylphenyl trifluoroethanesulfonate, 3,5-di-n-pentylphenyl trifluoroethanesulfonate, 2-t-amylphenyl trifluoroethanesulfonate, 3-t-amylphenyl trifluoroethanesulfonate, 4-t-amylphenyl trifluoroethanesulfonate, 2-cyclopentylphenyl trifluoroethanesulfonate, 3-cyclopentylphenyl trifluoroethanesulfonate, 4-cyclopentylphenyl trifluoroethanesulfonate, 2-cyclohexylphenyl trifluoroethanesulfonate, 3-cyclohexylphenyl trifluoroethanesulfonate, and 4-cyclohexylphenyl trifluoroethanesulfonate.

(Compounds in which n=0)

Examples of compounds in which n=0 include compounds in which $R_1$ is an alkyl group having 1-12 carbon atoms, compounds in which $R_1$ is an alkenyl group having 2-12 carbon atoms, compounds in which $R_1$ is an aryl group having 6-12 carbon atoms, compounds in which $R_1$ is an aralkyl group having 7-12 carbon atoms, and compounds in which $R_1$ is a fluorine-substituted alkyl group having 1-12 carbon atoms.

Examples of the compounds in which $R_1$ is an alkyl group having 1-12 carbon atoms include methyl 2-ethylphenyl sulfone, methyl 3-ethylphenyl sulfone, methyl 4-ethylphenyl sulfone, methyl 2-n-propylphenyl sulfone, methyl 3-n-propylphenyl sulfone, methyl 4-n-propylphenyl sulfone, methyl 2-isopropylphenyl sulfone, methyl 3-isopropylphenyl sulfone, methyl 4-isopropylphenyl sulfone, methyl 2-n-butylphenyl sulfone, methyl 3-n-butylphenyl sulfone, methyl 4-n-butylphenyl sulfone, methyl 2-isobutylphenyl sulfone, methyl 3-isobutylphenyl sulfone, methyl 4-isobutylphenyl sulfone, methyl 2-sec-butylphenyl sulfone, methyl 3-sec-butylphenyl sulfone, methyl 4-sec-butylphenyl sulfone, methyl 2-t-butylphenyl sulfone, methyl 3-t-butylphenyl sulfone, methyl 4-t-butylphenyl sulfone, methyl 2,4-di-t-butylphenyl sulfone, methyl 3,5-di-t-butylphenyl sulfone, methyl 2-t-amylphenyl sulfone, methyl 3-t-amylphenyl sulfone, methyl 4-t-amylphenyl sulfone, methyl 2,4-di-t-amylphenyl sulfone, methyl 3,5-di-t-amylphenyl sulfone, methyl 2-cyclopentylphenyl sulfone, methyl 3-cyclopentylphenyl sulfone, methyl 4-cyclopentylphenyl sulfone, methyl 2-cyelohexylphenyl sulfone, methyl 3-cyclohexylphenyl sulfone, methyl 4-cyclohexylphenyl sulfone, ethyl 2-ethylphenyl sulfone, ethyl 3-ethylphenyl sulfone, ethyl 4-ethylphenyl sulfone, ethyl 2-n-propylphenyl sulfone, ethyl 3-n-propylphenyl sulfone, ethyl 4-n-propylphenyl sulfone, ethyl 2-isopropylphenyl sulfone, ethyl 3-isopropylphenyl sulfone, ethyl 4-isopropylphenyl sulfone, ethyl 2-n-butylphenyl sulfone, ethyl 3-n-butylphenyl sulfone, ethyl 4-n-butylphenyl sulfone, ethyl 2-isobutylphenyl sulfone, ethyl 3-isobutylphenyl sulfone, ethyl 4-isobutylphenyl sulfone, ethyl 2-sec-butylphenyl sulfone, ethyl 3-sec-butylphenyl sulfone, ethyl 4-sec-butylphenyl sulfone, ethyl 2-t-butylphenyl sulfone, ethyl 3-t-butylphenyl sulfone, ethyl 4-t-butylphenyl sulfone, ethyl 2-t-amylphenyl sulfone, ethyl 3-t-amylphenyl sulfone, ethyl 4-t-amylphenyl sulfone, ethyl 2-cyclopentylphenyl sulfone, ethyl 3-cyclopentylphenyl sulfone, ethyl 4-cyclopentylphenyl sulfone, ethyl 2-cyclohexylphenyl sulfone, ethyl 3-cyclohexylphenyl sulfone, and ethyl 4-cyclohexylphenyl sulfone.

Examples of the compounds in which $R_1$ is an alkenyl group having 2-12 carbon atoms include vinyl 2-ethylphenyl sulfone, vinyl 3-ethylphenyl sulfone, vinyl 4-ethylphenyl sulfone, vinyl 2-n-propylphenyl sulfone, vinyl 3-n-propylphenyl sulfone, vinyl 4-n-propylphenyl sulfone, vinyl 2-isopropylphenyl sulfone, vinyl 3-isopropylphenyl sulfone, vinyl 4-isopropylphenyl sulfone, vinyl 2-n-butylphenyl sulfone, vinyl 3-n-butylphenyl sulfone, vinyl 4-n-butylphenyl sulfone, vinyl 2-isobutylphenyl sulfone, vinyl 3-isobutylphenyl sulfone, vinyl 4-isobutylphenyl sulfone, vinyl 2-sec-butylphenyl sulfone, vinyl 3-sec-butylphenyl sulfone, vinyl 4-sec-butylphenyl sulfone, vinyl 2-t-butylphenyl sulfone, vinyl 3-t-butylphenyl sulfone, vinyl 4-t-butylphenyl sulfone, vinyl 2-t-amylphenyl sulfone, vinyl 3-t-amylphenyl sulfone, vinyl 4-t-amylphenyl sulfone, vinyl 2-cyclopentylphenyl sulfone, vinyl 3-cyclopentylphenyl sulfone, vinyl 4-cyclopentylphenyl sulfone, vinyl 2-cyclohexylphenyl sulfone, vinyl 3-cyclohexylphenyl sulfone, vinyl 4-cyclohexylphenyl sulfone, allyl 2-ethylphenyl sulfone, allyl 3-ethylphenyl sulfone, allyl 4-ethylphenyl sulfone, allyl 2-n-propylphenyl sulfone, allyl 3-n-propylphenyl sulfone, allyl 4-n-propylphenyl sulfone, allyl 2-isopropylphenyl sulfone, allyl 3-isopropylphenyl sulfone, allyl 4-isopropylphenyl sulfone, allyl 2-n-butylphenyl sulfone, allyl 3-n-butylphenyl sulfone, allyl 4-n-butylphenyl sulfone, allyl 2-isobutylphenyl sulfone, allyl 3-isobutylphenyl sulfone, allyl 4-isobutylphenyl sulfone, allyl 2-sec-butylphenyl sulfone, allyl 3-sec-butylphenyl sulfone, allyl 4-sec-butylphenyl sulfone, allyl 2-t-butylphenyl sulfone, allyl 3-t-butylphenyl sulfone, allyl 4-t-butylphenyl sulfone, allyl 2-t-amylphenyl sulfone, allyl 3-t-amylphenyl sulfone, allyl 4-t-amylphenyl sulfone, allyl 2-cyclopentylphenyl sulfone, allyl 3-cyclopentylphenyl sulfone, allyl 4-cyclopentylphenyl sulfone, allyl 2-cyclohexylphenyl sulfone, allyl 3-cyclohexylphenyl sulfone, and allyl 4-cyclohexylphenyl sulfone.

Examples of the compounds in which $R_1$ is an aryl group having 6-12 carbon atoms include phenyl 2-ethylphenyl sulfone, phenyl 3-ethylphenyl sulfone, phenyl 4-ethylphenyl sulfone, phenyl 2-n-propylphenyl sulfone, phenyl 3-n-propylphenyl sulfone, phenyl 4-n-propylphenyl sulfone, phenyl 2-isopropylphenyl sulfone, phenyl 3-isopropylphenyl sulfone, phenyl 4-isopropylphenyl sulfone, phenyl 2-n-butylphenyl sulfone, phenyl 3-n-butylphenyl sulfone, phenyl 4-n-butylphenyl sulfone, phenyl 2-isobutylphenyl sulfone, phenyl 3-isobutylphenyl sulfone, phenyl 4-isobutylphenyl sulfone, phenyl 2-sec-butylphenyl sulfone, phenyl 3-see-butylphenyl sulfone, phenyl 4-sec-butylphenyl sulfone, phenyl 2-t-butylphenyl sulfone, phenyl 3-t-butylphenyl sulfone, phenyl 4-t-butylphenyl sulfone, phenyl 2-t-amylphenyl sulfone, phenyl 3-t-amylphenyl sulfone, phenyl 4-t-amylphenyl sulfone, phenyl 2-cyclopentylphenyl sulfone, phenyl 3-cyclopentylphenyl sulfone, phenyl 4-cyclopentylphenyl sulfone, phenyl 2-cyclohexylphenyl sulfone, phenyl 3-cyclohexylphenyl sulfone, phenyl 4-cyclohexylphenyl sulfone, bis(2-t-butylphenyl) sulfone, bis(3-t-butylphenyl) sulfone, bis(4-t-butylphenyl) sulfone, bis(2-t-amylphenyl) sulfone, bis(3-t-amylphenyl) sulfone, bis(4-t-amylphenyl) sulfone, bis(2-cyclopentylphenyl) sulfone, bis(3-cyclopentylphenyl) sulfone, bis(4-cyclopentylphenyl) sulfone, bis(2-cyclohexylphenyl) sulfone, bis(3-cyclohexylphenyl) sulfone, and bis(4-cyclohexylphenyl) sulfone.

Examples of the compounds in which $R_1$ is an aralkyl group having 7-12 carbon atoms include benzyl 2-ethylphenyl sulfone, benzyl 3-ethylphenyl sulfone, benzyl 4-ethylphenyl sulfone, benzyl 2-n-propylphenyl sulfone, benzyl 3-n-propylphenyl sulfone, benzyl 4-n-propylphenyl sulfone, benzyl 2-isopropylphenyl sulfone, benzyl 3-isopropylphenyl sulfone, benzyl 4-isopropylphenyl sulfone, benzyl 2-n-butylphenyl sulfone, benzyl 3-n-butylphenyl sulfone, benzyl 4-n-butylphenyl sulfone, benzyl 2-isobutylphenyl sulfone, benzyl 3-isobutylphenyl sulfone, benzyl 4-isobutylphenyl sulfone, benzyl 2-sec-butylphenyl sulfone, benzyl 3-sec-butylphenyl sulfone, benzyl 4-sec-butylphenyl sulfone, benzyl 2-t-butylphenyl sulfone, benzyl 3-t-butylphenyl sulfone, benzyl 4-t-butylphenyl sulfone, benzyl 2-t-amylphenyl sulfone, benzyl 3-t-amylphenyl sulfone, benzyl 4-t-amylphenyl sulfone, benzyl 2-cyclopentylphenyl sulfone, benzyl 3-cyclopentylphenyl sulfone, benzyl 4-cyclopentylphenyl sulfone, benzyl 2-cyclohexylphenyl sulfone, benzyl 3-cyclohexylphenyl sulfone, and benzyl 4-cyclohexylphenyl sulfone.

Examples of the compounds in which $R_1$ is a fluorine-substituted alkyl group having 1-12 carbon atoms include trifluoromethyl 2-ethylphenyl sulfone, trifluoromethyl 3-ethylphenyl sulfone, trifluoromethyl 4-ethylphenyl sulfone, trifluoromethyl 2-n-propylphenyl sulfone, trifluoromethyl 3-n-propylphenyl sulfone, trifluoromethyl 4-n-propylphenyl sulfone, trifluoromethyl 2-isopropylphenyl sulfone, trifluoromethyl 3-isopropylphenyl sulfone, trifluoromethyl 4-isopropylphenyl sulfone, trifluoromethyl 2-n-butylphenyl sulfone, trifluoromethyl 3-n-butylphenyl sulfone, trifluoromethyl 4-n-butylphenyl sulfone, trifluoromethyl 2-isobutylphenyl sulfone, trifluoromethyl 3-isobutylphenyl sulfone, trifluoromethyl 4-isobutylphenyl sulfone, trifluoromethyl 2-sec-butylphenyl sulfone, trifluoromethyl 3-sec-butylphenyl sulfone, trifluoromethyl 4-sec-butylphenyl sulfone, trifluoromethyl 2-t-butylphenyl sulfone, trifluoromethyl 3-t-butylphenyl sulfone, trifluoromethyl 4-t-butylphenyl sulfone, trifluoromethyl 2-t-amylphenyl sulfone, trifluoromethyl 3-t-amylphenyl sulfone, trifluoromethyl 4-t-amylphenyl sulfone, trifluoromethyl 2-cyclopentylphenyl sulfone, trifluoromethyl 3-cyclopentylphenyl sulfone, trifluoromethyl 4-cyclopentylphenyl sulfone, trifluoromethyl 2-cyclohexylphenyl sulfone, trifluoromethyl 3-cyclohexylphenyl sulfone, trifluoromethyl 4-cyclohexylphenyl sulfone, trifluoroethyl 2-ethylphenyl sulfone, trifluoroethyl 3-ethylphenyl sulfone, trifluoroethyl 4-ethylphenyl sulfone, trifluoroethyl 2-n-propylphenyl sulfone, trifluoroethyl 3-n-propylphenyl sulfone, trifluoroethyl 4-n-propylphenyl sulfone, trifluoroethyl 2-isopropylphenyl sulfone, trifluoroethyl 3-isopropylphenyl sulfone, trifluoroethyl 4-isopropylphenyl sulfone, trifluoroethyl 2-n-butylphenyl sulfone, trifluoroethyl 3-n-butylphenyl sulfone, trifluoroethyl 4-n-butylphenyl sulfone, trifluoroethyl 2-isobutylphenyl sulfone, trifluoroethyl 3-isobutylphenyl sulfone, trifluoroethyl 4-isobutylphenyl sulfone, trifluoroethyl 2-sec-butylphenyl sulfone, trifluoroethyl 3-sec-butylphenyl sulfone, trifluoroethyl 4-sec-butylphenyl sulfone, trifluoroethyl 2-t-butylphenyl sulfone, trifluoroethyl 3-t-butylphenyl sulfone, trifluoroethyl 4-t-butylphenyl sulfone, trifluoroethyl 2-t-amylphenyl sulfone, trifluoroethyl 3-t-amylphenyl sulfone, trifluoroethyl 4-t-amylphenyl sulfone, trifluoroethyl 2-cyclopentylphenyl sulfone, trifluoroethyl 3-cyclopentylphenyl sulfone, trifluoroethyl 4-cyclopentylphenyl sulfone, trifluoroethyl 2-cyclohexylphenyl sulfone, trifluoroethyl 3-cyclohexylphenyl sulfone, and trifluoroethyl 4-cyclohexylphenyl sulfone.

From the standpoints of improving safety during overcharge and improving high-temperature continuous-charge characteristics, the compounds represented by general formula (3) in which at least one of $R_2$ to $R_6$ is a secondary alkyl or tertiary alkyl group having 4 or more carbon atoms are preferred of the compounds shown above. More preferred are the compounds represented by general formula (3) in which at least one of $R_2$ to $R_6$ is any one of t-butyl, t-amyl, cyclopentyl, and cyclohexyl.

Even more preferred are the compounds represented by general formula (3) in which n is 1 and at least one of $R_2$ to $R_6$ is any one of t-amyl, cyclopentyl, and cyclohexyl. Especially preferred are the compounds represented by general formula (3) in which n is 1 and $R_4$ is any one of t-amyl, cyclopentyl, and cyclohexyl. More especially preferred are the compounds represented by general formula (3) in which n is 1, $R_1$ is methyl, $R_2$, $R_3$, $R_5$, and $R_6$ each are a hydrogen atom, and $R_4$ is cyclohexyl or t-amyl. Most preferred of these are the compounds in which $R_1$ is methyl, $R_2$, $R_3$, $R_5$, and $R_6$ each are a hydrogen atom, and $R_4$ is cyclohexyl.

One compound represented by general formula (3) may be used alone, or two or more compounds represented by general formula (3) may be used in combination.

[1-2. Composition]

The proportion of the compound represented by general formula (3) in the nonaqueous electrolytic solution is preferably 0.001% by mass or higher, more preferably 0.01% by mass or higher, even more preferably 0.05% by mass or higher, especially preferably 0.1 % by mass or higher. The proportion thereof is preferably 10% by mass or lower, more preferably 5% by mass or lower, even more preferably 3% by mass or lower, especially preferably 2% by mass or lower, most preferably 1.5% by mass or lower.

By regulating the proportion of the compound represented by general formula (3) to a value not lower than the lower limit, the effects of the invention can be sufficiently produced. By regulating the proportion of the compound represented by general formula (3) to a value not higher than the upper limit, an improvement in battery capacity can be attained.

[2. Electrolyte]

There are no limitations on the electrolyte to be used in the nonaqueous electrolytic solution of the invention, and any known electrolyte usable in the desired nonaqueous-electrolyte secondary battery can be used at will. In the case where the nonaqueous electrolytic solution of the invention is for use in lithium secondary batteries, a lithium salt is usually used as the electrolyte.

Examples of the electrolyte include: inorganic lithium salts such as $LiClO_4$, $LiAsF_6$, $LiPF_6$, $LiBF_4$, and $LiFSO_3$; fluorine-containing organic lithium salts such as $LiCF_3SO_3$, $LiN(CF_3SO_2)_2$, $LiN(C_2F_5SO_2)_2$, the lithium salt of cyclic 1,2-tetrafluoroethanedisulfonylimide, the lithium salt of cyclic 1,3-hexafluoropropanedisulfonylimide, $LiN(CF_3SO_2)(C_4F_9SO_2)$, $LiC(CF_3SO_2)_3$, $LiPF_4(CF_3)_2$, $LiPF_4(C_2F_5)_2$, $LiPF_4(CF_3SO_2)_2$, $LiPF_4(C_2F_5SO_2)_2$, $LiBF_2(CF_3)_2$, $LiBF_2(C_2F_s)_2$, $LiBF_2(CF_3SO_2)_2$, and $LiBF_2(C_2F_5SO_2)_2$; and lithium salts of dicarboxylic acid complexes, such as lithium bis(oxalato) borate, lithium difluorooxalatoborate, lithium tris(oxalato)phosphoate, lithium difluorobis(oxalato)phosphate, and lithium tetrafluorooxalatophosphate.

Preferred of these are $LiPF_6$, $LiBF_4$, $LiFS0_3$, $LiCF_3SO_3$, $LiN(CF_3SO_2)_2$, $LiN(C_2F_5SO_2)_2$, the lithium salt of cyclic 1,2-tetrafluoroethanedisulfonylimide, the lithium salt of cyclic 1,3-hexafluoropropanedisulfonylimide, lithium bis(oxalato) borate, lithium difluorooxalatoborate, lithium tris(oxalato)phosphoate, lithium difluorobis(oxalato)phosphate, and lithium tetrafluorooxalatophosphate. Especially preferred are $LiPF_6$ and $LiBF_4$.

One of these lithium salts may be used alone, or two or more thereof may be used in any desired combination

and proportion. In particular, a combination of specific inorganic lithium salts and a combination of an inorganic lithium salt and either a fluorine-containing organic lithium salt or a lithium salt of a carboxylic acid complex are preferred because use of these combinations are effective in inhibiting gas evolution during high-temperature storage or in inhibiting the battery from deteriorating through high-temperature storage.

The combination of inorganic lithium salts especially preferably is a combination of $LiPF_6$ and $LiBF_4$. With respect to the combination of an inorganic lithium salt and either a fluorine-containing organic lithium salt or a lithium salt of a carboxylic acid complex, it is preferred to use inorganic lithium salts, e.g., $LiPF_6$ and $LiBF_4$, in combination with fluorine-containing organic lithium salts, e.g., $LiCF_3S0_3$, $LiN(CF_3SO_2)_2$, $LiN(C_2F_5SO_2)_2$, the lithium salt of cyclic 1,2-tetrafluoroethanedisulfonylimide, and the lithium salt of cyclic 1,3-hexafluoropropanedisulfonylimide, and lithium salts of dicarboxylic acid complexes, e.g., lithium bis(oxalato)borate, lithium difluorooxalatoborate, lithium tris(oxalato)phosphoate, lithium difluorobis(oxalato)phosphate, and lithium tetrafluorooxalatophosphate.

In the case where $LiPF_6$ and $LiBF_4$ are used in combination, the proportion of the $LiBF_4$ in the sum of the $LiPF_6$ and the $LiBF_4$ is preferably 0.01 % by mass or higher, more preferably 0.05% by mass or higher, even more preferably 0.1% by mass or higher. The proportion thereof is preferably 20% by mass or lower, more preferably 10% by mass or lower, even more preferably 5% by mass or lower, especially preferably 3% by mass or lower.

By regulating the proportion of the $LiBF_4$ in the sum of the $LiPF_6$ and the $LiBF_4$ to a value not lower than the lower limit, the effects of the invention can be sufficiently obtained. By regulating the proportion of the $LiBF_4$ in the sum of the $LiPF_6$ and the $LiBF_4$ to a value not higher than the upper limit, battery characteristics including high-load discharge characteristics can be improved.

On the other hand, in the case where an inorganic lithium salt is used in combination with either a fluorine-containing organic lithium salt or a lithium salt of a carboxylic acid complex, the proportion of the inorganic lithium salt in the sum of both is preferably 70% by mass or higher, more preferably 80% by mass or higher, even more preferably 85% by mass or higher. The proportion thereof is preferably 99% by mass or lower, more preferably 95% by mass or lower.

The concentration of the electrolyte in the nonaqueous electrolytic solution is not particularly limited. However, from the standpoint of producing the effects of the invention, the concentration thereof is preferably 0.5 mol/l, or higher, more preferably 0.8 mol/L or higher, even more preferably 1.0 mol/L or higher. The concentration thereof is preferably 3 mol/L or lower, more preferably 2 mol/L or lower, even more preferably 1.8 mol/L or lower, especially preferably 1.6 mol/L or lower.

By regulating the concentration of the electrolyte in the nonaqueous electrolytic solution to a value not lower than the lower limit, the electrical conductivity of the nonaqueous electrolytic solution can be improved. By regulating the concentration of the electrolyte in the nonaqueous electrolytic solution to a value not higher than the upper limit, the nonaqueous electrolytic solution can be prevented from having an increased viscosity and be made to have improved electrical conductivity, and battery performance can be improved.

[3. Nonaqueous Solvent]

The nonaqueous solvent to be used can also be suitably selected from nonaqueous solvents which have been known as solvents for nonaqueous electrolytic solutions. Examples thereof include cyclic carbonates, linear carbonates, cyclic carboxylic acid esters, chain carboxylic acid esters, cyclic ethers, chain ethers, sulfur-containing organic solvents, phosphorus-containing organic solvents, and fluorine-containing aromatic solvents.

Examples of the cyclic carbonates include alkylene carbonates having an alkylene group with 2-4 carbon atoms, such as ethylene carbonate, propylene carbonate, and butylene carbonate. Of these, ethylene carbonate and propylene carbonate are preferred from the standpoint of improving battery characteristics. Ethylene carbonate is especially preferred. These compounds may have been partly substituted with fluorine.

Examples of the fluorine-substituted cyclic carbonates include alkylene carbonates having a fluorine-substituted alkylene group having 2-4 carbon atoms, such as fluoroethylene carbonate, 1,2-difluoroethylene carbonate, 1,1-difluoroethylene carbonate, 1,1,2-trifluoroethylene carbonate, tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, and trifluoromethylethylene carbonate. Preferred of these are fluoroethylene carbonate, 1,2-difluoroethylene carbonate, and trifluoromethylethylene carbonate.

The linear carbonates preferably are dialkyl carbonates, and the number of carbon atoms of each of the constituent alkyl groups is preferably 1-5, especially preferably 1-4. Specific examples thereof include: symmetrical chain alkyl carbonates such as dimethyl carbonate, diethyl carbonate, and di-n-propyl carbonate; and unsymmetrical chain alkyl carbonates such as ethyl methyl carbonate, methyl n-propyl carbonate, and ethyl n-propyl carbonate. Dimethyl carbonate, diethyl carbonate, and ethyl methyl carbonate are preferred of these from the standpoint of improving battery characteristics.

Part of the hydrogen atoms of the alkyl groups may have been replaced with fluorine. Examples of the fluorine-substituted linear carbonates include bis(fluoromethyl) carbonate, bis(difluoromethyl) carbonate, bis(trifluoromethyl)

carbonate, bis(2-fluoroethyl) carbonate, bis(2,2-difluoroethyl) carbonate, bis(2,2,2-trifluoroethyl) carbonate, 2-fluoroethyl methyl carbonate, 2,2-difluoroethyl methyl carbonate, and 2,2,2-trifluoroethyl methyl carbonate.

Examples of the cyclic carboxylic acid esters include γ-butyrolactone, y-valerolactone, and the like and compounds formed by replacing part of the hydrogen atoms of these compounds with fluorine.

Examples of the chain carboxylic acid esters include methyl acetate, ethyl acetate, propyl acetate, isopropyl acetate, butyl acetate, sec-butyl acetate, isobutyl acetate, t-butyl acetate, methyl propionate, ethyl propionate, prol propionate, isopropyl propionate, methyl butyrate, ethyl butyrate, propyl butyrate, methyl valerate, ethyl valerate, and the like and compounds formed by replacing part of the hydrogen atoms of these compounds with fluorine, such as propyl trifluoroacetate and butyl trifluoroacetate. Preferred of these are methyl acetate, ethyl acetate, propyl acetate, butyl acetate, methyl propionate, ethyl propionate, propyl propionate, methyl butyrate, ethyl butyrate, and methyl valerate.

Examples of the cyclic ethers include tetrahydrofuran, 2-methyltetrahydrofuran, and the like and compounds formed by replacing part of the hydrogen atoms of these compounds with fluorine.

Examples of the chain ethers include dimethoxyethane and diethoxyethane. Examples of compounds formed by replacing part of the hydrogen atoms of such compounds with fluorine include bis(trifluoroethoxy)ethane, ethoxytrifluoroethoxyethane, methoxytrifluoroethoxyethane, 1,1,1,2,2,3,4,5,5,5-decafluoro-3-methoxy-4-trifluoromethylpentane, l, l,1,2,2,3,4,5,5,5-decafluoro-3-ethoxy-4-trifluoromethylpentane, 1,1,1,2,2,3,4,5,5,5-decafluoro-3-propoxy-4-trifluoromethylpentane, 1,1,2,2-tetrafluoroethyl 2,2,3,3-tetrafluoropropyl ether, and 2,2-difluoroethyl 2,2,3,3-tetrafluoropropyl ether.

Examples of the sulfur-containing organic solvents include sulfolane, 2-methylsulfolane, 3-methylsulfolane, diethyl sulfone, ethyl methyl sulfone, methyl propyl sulfone, and the like and compounds formed by replacing part of the hydrogen atoms of these compounds with fluorine.

Examples of the phosphorus-containing organic solvents include trimethyl phosphate, triethyl phosphate, dimethyl ethyl phosphate, methyl diethyl phosphate, ethylene methyl phosphate, ethylene ethyl phosphate, and the like and compounds formed by replacing part of the hydrogen atoms of these compounds with fluorine.

Examples of the fluorine-containing aromatic solvents include fluorobenzene, difluorobenzene, trifluorobenzene, tetrafluorobenzene, pentafluorobenzene, hexafluorobenzene, and benzotrifluoride.

Those compounds may be used alone or in combination of two or more thereof. It is, however, preferred to use two or more compounds in combination. For example, it is preferred to use a high-permittivity solvent, e.g., a cyclic carbonate and a cyclic carboxylic acid ester, and a low-viscosity solvent, e.g., a linear carbonate and a chain carboxylic acid ester, in combination.

One preferred combination of nonaqueous solvents is a combination consisting mainly of an alkylene carbonate and a dialkyl carbonate. When a combination of these nonaqueous solvents is used, there are cases where the battery produced using the combination has an improved balance between cycle characteristics and high-temperature storability (in particular, residual capacity after high-temperature storage and high-load discharge capacity).

In the case where a nonaqueous solvent including that combination is used, the proportion of the sum of the alkylene carbonate and the dialkyl carbonate in the nonaqueous solvent is preferably 70% by volume or higher, more preferably 80% by volume or higher, even more preferably 90% by volume or higher.

The proportion of the alkylene carbonate to the sum of the alkylene carbonate and the dialkyl carbonate is preferably 5% by volume or higher, more preferably 10% by volume or higher, even more preferably 15% by volume or higher. The proportion thereof is preferably 50% by volume or lower, more preferably 35% by volume or lower, even more preferably 30% by volume or lower, especially preferably 25% by volume or lower.

Preferred examples of the alkylene carbonate are ethylene carbonate, propylene carbonate, and fluoroethylene carbonate from the standpoint of improving the cycle characteristics and high-temperature storability of the battery.

Specific examples of preferred combinations of ethylene carbonate and one or more dialkyl carbonates include: ethylene carbonate and dimethyl carbonate; ethylene carbonate and diethyl carbonate; ethylene carbonate and ethyl methyl carbonate; ethylene carbonate, dimethyl carbonate, and diethyl carbonate; ethylene carbonate, dimethyl carbonate, and ethyl methyl carbonate; ethylene carbonate, diethyl carbonate, and ethyl methyl carbonate; and ethylene carbonate, dimethyl carbonate, diethyl carbonate, and ethyl methyl carbonate.

Combinations including propylene carbonate in addition to those combinations of ethylene carbonate and one or more dialkyl carbonates are also preferred combinations. In the case where propylene carbonate is contained, the volume ratio of the ethylene carbonate to the propylene carbonate is preferably from 99:1 to 40:60, especially preferably from 95:5 to 50:50.

Furthermore, the proportion of the propylene carbonate in the whole nonaqueous solvent is preferably 0.1 % by volume or higher, more preferably 1% by volume or higher, even more preferably 2% by volume or higher. The proportion thereof is preferably 20% by volume or lower, more preferably 8% by volume or lower, even more preferably 5% by volume or lower. The incorporation of propylene carbonate in a concentration within that range is preferred because there are cases where low-temperature characteristics are further improved while maintaining the characteristics brought about by the combination of ethylene carbonate and one or more dialkyl carbonates.

More preferred of the combinations of ethylene carbonate and one or more dialkyl carbonates are combinations in which the dialkyl carbonates include an unsymmetrical chain alkyl carbonate. In particular, combinations including ethylene carbonate, a symmetrical chain alkyl carbonate, and an unsymmetrical chain alkyl carbonate are preferred because these combinations bring about a satisfactory balance between cycle characteristics and high-current discharge characteristics. Examples of such preferred combinations include: ethylene carbonate, dimethyl carbonate, and ethyl methyl carbonate; ethylene carbonate, diethyl carbonate, and ethyl methyl carbonate; and ethylene carbonate, dimethyl carbonate, diethyl carbonate, and ethyl methyl carbonate. Preferred of such combinations are combinations in which the unsymmetrical chain alkyl carbonate is ethyl methyl carbonate. It is preferred that the alkyl groups of the alkyl carbonate each should have 1-2 carbon atoms.

Specific examples of preferred combinations of fluoroethylene carbonate and one or more dialkyl carbonates include: fluoroethylene carbonate and dimethyl carbonate; fluoroethylene carbonate and diethyl carbonate; fluoroethylene carbonate and ethyl methyl carbonate; fluoroethylene carbonate, dimethyl carbonate, and diethyl carbonate; fluoroethylene carbonate, dimethyl carbonate, and ethyl methyl carbonate; fluoroethylene carbonate, diethyl carbonate, and ethyl methyl carbonate; and fluoroethylene carbonate, dimethyl carbonate, diethyl carbonate, and ethyl methyl carbonate.

Combinations including ethylene carbonate and/or propylene carbonate in addition to those combinations of fluoroethylene carbonate and one or more diallyl carbonates are also preferred combinations.

In the case where diethyl carbonate is contained in the nonaqueous solvent, the proportion of the diethyl carbonate in the whole nonaqueous solvent is preferably 10% by volume or higher, more preferably 20% by volume or higher, even more preferably 25% by volume or higher, especially preferably 30% by volume or higher. The proportion thereof is preferably 90% by volume or lower, more preferably 80% by volume or lower, even more preferably 75% by volume or lower, especially preferably 70% by volume or lower. When diethyl carbonate is contained in the nonaqueous solvent in an amount within that range, there are cases where gas evolution during high-temperature storage is inhibited.

In the case where dimethyl carbonate is contained in the nonaqueous solvent, the proportion of the dimethyl carbonate in the whole nonaqueous solvent is preferably 10% by volume or higher, more preferably 20% by volume or higher, even more preferably 25% by volume or higher, especially preferably 30% by volume or higher. The proportion thereof is preferably 90% by volume or lower, more preferably 80% by volume or lower, even more preferably 75% by volume or lower, especially preferably 70% by volume or lower. There are cases where incorporation of dimethyl carbonate in an amount within that range improves the load characteristics of the battery.

It is especially preferred that the nonaqueous solvent should include dimethyl carbonate and ethyl methyl carbonate so that the content of the dimethyl carbonate is higher than the content of the ethyl methyl carbonate. This is because there are cases where retention of battery characteristics through high-temperature storage is improved while ensuring the electrical conductivity of the electrolytic solution.

The volume ratio of the dimethyl carbonate to the ethyl methyl carbonate (dimethyl carbonate/ethyl methyl carbonate) in the whole nonaqueous solvent is preferably 1.1 or greater, more preferably 1.5 or greater, even more preferably 2.5 or greater, from the standpoints of improving the electrical conductivity of the electrolytic solution and improving retention of battery characteristics through storage.

The volume ratio thereof (dimethyl carbonate/ethyl methyl carbonate) is preferably 40 or less, more preferably 20 or less, even more preferably 10 or less, especially preferably 8 or less, from the standpoint of improving low-temperature battery characteristics.

In the combinations consisting mainly of one or more alkylene carbonates and one or more dialkyl carbonates, the carbonates may be mixed with other solvents such as, for example, cyclic carbonates and linear carbonates other than the alkylene carbonates and dialkyl carbonates, cyclic carboxylic acid esters, chain carboxylic acid esters, cyclic ethers, chain ethers, sulfur-containing organic solvents, phosphorus-containing organic solvents, and fluorine-containing aromatic solvents.

Another preferred example of the nonaqueous solvent is a nonaqueous solvent in which 60% by volume or more of the whole solvent is accounted for by one organic solvent selected from the group consisting of ethylene carbonate, propylene carbonate, and butylene carbonate or by a mixed solvent composed of two or more organic solvents selected from the group.

There are cases where the nonaqueous electrolytic solution employing such a mixed solvent is less apt to suffer solvent vaporization or liquid leakage even when used at high temperatures. In particular, when use is made of a nonaqueous solvent in which the total proportion of ethylene carbonate and propylene carbonate in the nonaqueous solvent is preferably 70% by volume or higher, more preferably 80% by volume or higher, even more preferably 90% by volume or higher, and in which the volume ratio of the ethylene carbonate to the propylene carbonate is preferably from 30:70 to 60:40, then there are cases where an improved balance between cycle characteristics and high-temperature storability, etc. is obtained.

In this description, the volumes of nonaqueous solvents are values measured at 25°C. However, with respect to nonaqueous solvents which are solid at 25°C, such as ethylene carbonate, values measured at the melting points are used.

[4. Other Compounds]

The nonaqueous electrolytic solution of the invention may contain other various compounds as aids unless the effects of the invention are lessened thereby. Examples of the other compounds include at least one compound selected from the group consisting of cyclic carbonate compounds having a carbon-carbon unsaturated bond, cyclic carbonate compounds having one or more fluorine atoms, monofluorophosphoric acid salts, and difluorophosphoric acid salts, and further include conventionally known overcharge inhibitors.

Preferred of such other various compounds is at least one compound selected from the group consisting of cyclic carbonate compounds having a carbon-carbon unsaturated bond, cyclic carbonate compounds having one or more fluorine atoms, monofluorophosphoric acid salts, and difluorophosphoric acid salts. This is because the at least one compound forms a stable coating film on the negative electrode and, hence, there are cases where use of the nonaqueous electrolytic solution containing the at least one compound improves cycle characteristics and retention of battery characteristics through high-temperature storage.

[4-1. Cyclic Carbonate Compounds Having Carbon-Carbon Unsaturated Bond]

Examples of the cyclic carbonate compounds having a carbon-carbon unsaturated bond include: vinylene carbonate compounds such as vinylene carbonate, methylvinylene carbonate, ethylvinylene carbonate, 1,2-dimethylvinylene carbonate, 1,2-diethylvinylene carbonate, fluorovinylene carbonate, and trifluoromethylvinylene carbonate; vinylethylene carbonate compounds such as vinylethylene carbonate, 1-methyl-2-vinylethylene carbonate, 1-ethyl-2-vinylethylene carbonate, 1-n-propyl-2-vinylethylene carbonate, 1-methyl-2-vinylethylene carbonate, 1,1-divinylethylene carbonate, and 1,2-divinylethylene carbonate; and methylene-ethylene carbonate compounds such as 1,1-dimethyl-2-methylene-ethylene carbonate and 1,1-diethyl-2-methylene-ethylene carbonate.

Preferred of these, from the standpoint of improving cycle characteristics and capacity retentivity through high-temperature storage, are vinylene carbonate, vinylethylene carbonate, and 1,2-divinylethylene carbonate. More preferred of these are vinylene carbonate and vinylethylene carbonate. Especially preferred is vinylene carbonate. These compounds may be used alone or in combination of two or more thereof.

In the case where two or more compounds are to be used in combination, it is preferred to use vinylene carbonate and vinylethylene carbonate in combination.

In the case where the nonaqueous electrolytic solution contains a cyclic carbonate compound having a carbon-carbon unsaturated bond, the proportion of this compound in the nonaqueous electrolytic solution is preferably 0.001 % by mass or higher, more preferably 0.01 % by mass or higher, even more preferably 0.1% by mass or higher, especially preferably 0.3% by mass or higher. The proportion thereof is preferably 8% by mass or lower, more preferably 4% by mass or lower, even more preferably 3% by mass or lower.

By regulating the proportion of the cyclic carbonate compound having a carbon-carbon unsaturated bond to a value not lower than the lower limit, the effect of improving the cycle characteristics and the capacity retentivity through high-temperature storage of the battery can be sufficiently produced. By regulating the proportion of the cyclic carbonate compound having a carbon-carbon unsaturated bond to a value not higher than the upper limit, gas evolution during high-temperature storage can be inhibited and low-temperature discharge characteristics can be improved.

[4-2. Cyclic Carbonate Compounds Having Fluorine Atom(s)]

Examples of the cyclic carbonate compounds having one or more fluorine atoms include fluoroethylene carbonate, 1,2-difluoroethylene carbonate, 1,1-difluoroethylene carbonate, 1,1,2-trifluoroethylene carbonate, tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, and trifluoromethylethylene carbonate.

Preferred of these, from the standpoints of improving cycle characteristics and improving high-temperature storability, are fluoroethylene carbonate, 1,2-difluoroethylene carbonate, and 1-fluoro-2-methylethylene carbonate. These compounds may be used alone or in combination of two or more thereof.

Such a cyclic carbonate compound having one or more fluorine atoms may be used in combination with any of the cyclic carbonate compounds having a carbon-carbon unsaturated bond or with any of the monofluorophosphoric acid salts and difluorophosphoric acid salts which will be described below. Use of such combinations is preferred from the standpoints of improving cycle characteristics and improving high-temperature storability.

In the case where the nonaqueous electrolytic solution contains a cyclic carbonate compound having one or more fluorine atoms as an aid, the proportion thereof in the nonaqueous electrolytic solution is preferably 0.001% by mass or higher, more preferably 0.1 % by mass or higher, even more preferably 0.3% by mass or higher, especially preferably 0.5% by mass or higher. The proportion thereof is preferably 10% by mass or lower, more preferably 5% by mass or lower, even more preferably 4% by mass or lower, especially preferably 3% by mass or lower.

By regulating the proportion of the cyclic carbonate compound having one or more fluorine atoms to a value not lower than the lower limit, the effect of improving the cycle characteristics and high-temperature storability of the battery can be sufficiently produced. By regulating the proportion of the cyclic carbonate compound having one or more fluorine atoms to a value not higher than the upper limit, gas evolution during high-temperature storage can be inhibited and low-temperature discharge characteristics can be improved.

[4-3. Monofluorophosphoric Acid Salts and Difluorophosphoric Acid Salts]

The counter cations of the monofluorophosphoric acid salts and difluorophosphoric acid salts are not particularly limited. Examples thereof include lithium, sodium, potassium, magnesium, calcium, and an ammonium represented by $NR^1R^2R^3R^4$ (wherein $R^1$ to $R^4$ each independently represent a hydrogen atom or an organic group having 1-12 carbon atoms).

The organic groups of the ammonium which have 1-12 carbon atoms and are represented by $R^1$ to $R^4$ are not particularly limited. Examples thereof include alkyl groups which may have been substituted with one or more halogen atoms, cycloalkyl groups which may have been substituted with one or more halogen atoms or alkyl groups, aryl groups which may have been substituted with one or more halogen atoms or alkyl groups, and nitrogen-atom-containing heterocyclic groups which may have one or more substituents. In particular, it is preferred that $R^1$ to $R^4$ each should independently be a hydrogen atom, an alkyl group, a cycloalkyl group, and a nitrogen-atom-containing heterocyclic group.

Specific examples of the monofluorophosphoric acid salts and difluorophosphoric acid salts include lithium monofluorophosphate, sodium monofluorophosphate, potassium monofluorophosphate, tetramethylammonium monofluorophosphate, tetraethylammonium monofluorophosphate, lithium difluorophosphate, sodium difluorophosphate, potassium difluorophosphate, tetramethylammonium difluorophosphate, and tetraethylammonium difluorophosphate. Preferred of these are lithium monofluorophosphate and lithium difluorophosphate. More preferred is lithium difluorophosphate.

These salts may be used alone or in combination of two or more thereof.

In the case where the nonaqueous electrolytic solution contains a monofluorophosphoric acid salt and/or a difluorophosphoric acid salt, the proportion of the salt(s) in the nonaqueous electrolytic solution is preferably 0.001 % by mass or higher, more preferably 0.01% by mass or higher, even more preferably 0.1 % by mass or higher, especially preferably 0.2% by mass or higher. The proportion thereof is preferably 5% by mass or lower, more preferably 3% by mass or lower, even more preferably 2% by mass or lower.

By regulating the proportion of the monofluorophosphoric acid salt and/or difluorophosphoric acid salt to a value not lower than the lower limit, the effect of improving the cycle characteristics and high-temperature storability of the battery can be sufficiently produced. By regulating the proportion of the monofluorophosphoric acid salt and/or difluorophosphoric acid salt to a value not higher than the upper limit, the salt(s) can be easily dissolved in the nonaqueous electrolytic solution, making it possible to obtain sufficient effects.

[4-4. Others]

Examples of the overcharge inhibitors include: aromatic compounds such as biphenyl, alkylbiphenyls, e.g., 2-methylbiphenyl and 2-ethylbiphenyl, terphenyl, partly hydrogenated terphenyl, cyclopentylbenzene, cyclohexylbenzene, cis-1-propyl-4-phenylcyclohexane, trans-1-propyl-4-phenylcyclohexane, cis-1-butyl-4-phenylcyclohexane, trans-1-butyl-4-phenylcyclohexane, t-butylbenzene, t-amylbenzene, diphenyl ether, dibenzofuran, methyl phenyl carbonate, ethyl phenyl carbonate, diphenyl carbonate, triphenyl phosphate, tris(2-t-butylphenyl) phosphate, tris(3-t-butylphenyl) phosphate, tris(4-t-butylphenyl) phosphate, tris(2-t-amylphenyl) phosphate, tris(3-t-amylphenyl) phosphate, tris(4-t-amylphenyl) phosphate, tris(2-cyclohexylphenyl) phosphate, tris(3-cyclohexylphenyl) phosphate, and tris(4-cyclohexylphenyl) phosphate; products of partial hydrogenation of these aromatic compounds, such as 2-fluorobiphenyl, 3-fluorobiphenyl, 4-fluorobiphenyl, 4,4'-difluorobiphenyl, 2,4-difluorobiphenyl, o-cyclohexylfluorobenzene, and p-cyclohexylfluorobenzene; and fluorine-containing anisole compounds such as 2,4-difluoroanisole, 2,5-difluoroanisole, 2,6-difluoroanisole, and 3,5-difluoroanisole.

Preferred of these are: aromatic compounds such as biphenyl, alkylbiphenyls, e.g., 2-methylbiphenyl, terphenyl, partly hydrogenated terphenyl, cyclopentylbenzene, cyclohexylbenzene, cis-1-propyl-4-phenylcyclohexane, trans-1-propyl-4-phenylcyclohexane, cis-1-butyl-4-phenylcyclohexane, trans-1-butyl-4-phenylcyclohexane, t-butylbenzene, t-amylbenzene, diphenyl ether, dibenzofuran, methyl phenyl carbonate, diphenyl carbonate, triphenyl phosphate, tris(4-t-butylphenyl) phosphate, and tris(4-cyclohexylphenyl) phosphate; and products of partial hydrogenation of these aromatic compounds, such as 2-fluorobiphenyl, 3-fluorobiphenyl, 4-fluorobiphenyl, 4,4'-difluorobiphenyl, o-cyclohexylfluorobenzene, and p-cyclobexylfluorobenzene. More preferred are partly hydrogenated terphenyl, cyclopentylbenzene, cyclohexylbenzene, cis-1-propyl-4-phenylcyclohexane, trans-1-propyl-4-phenylcyclohexane, cis-1-butyl-4-phenylcyclohexane, trans-1-butyl-4-phenylcyclohexane, t-butylbenzene, t-amylbenzene, methyl phenyl carbonate, diphenyl carbonate, triphenyl phosphate, tris(4-t-butylphenyl) phosphate, tris(4-cyclohexylphenyl) phosphate, o-cyclohexylfluorobenzene, and p-cyclohexylfluorobenzene. Especially preferred are partly hydrogenated terphenyl and cyclohexylbenzene.

Two or more of those compounds may be used in combination. In the case where two or more compounds are to be used in combination, especially preferred combinations are a combination of partly hydrogenated terphenyl or cyclohexylbenzene with t-butylbenzene or t-amylbenzene and a combination of one or more compounds selected from aromatic compounds containing no oxygen, such as biphenyl, alkylbiphenyls, terphenyl, partly hydrogenated terphenyl, cyclohexylbenzene, t-butylbenzene, and t-amylbenzene, with one or more compounds selected from oxygen-containing aromatic compounds such as diphenyl ether and dibenzofuran, from the standpoint of a balance between overcharge inhibitive properties and high-temperature storability.

The content of these overcharge inhibitors in the nonaqueous electrolytic solution is preferably 0.1% by mass or higher, more preferably 0.2% by mass or higher, even more preferably 0.3% by mass or higher, especially preferably 0.5% by mass or higher. The content thereof is preferably 5% by mass or lower, more preferably 3% by mass or lower, even more preferably 2% by mass or lower.

By regulating the concentration of the overcharge inhibitors to a value not lower than the lower limit, the desired effect of the overcharge inhibitors can be sufficiently produced. Conversely, by regulating the concentration of the overcharge inhibitors to a value not higher than the upper limit, battery characteristics including high-temperature storability can be prevented from decreasing.

Examples of other aids include: carbonate compounds such as erythritan carbonate, spiro-bis-dimethylene carbonate, methoxyethyl methyl carbonate, methoxyethyl ethyl carbonate, ethoxyethyl methyl carbonate, and ethoxyethyl ethyl carbonate; carboxylic acid anhydrides such as succinic anhydride, glutaric anhydride, maleic anhydride, itaconic anhydride, citraconic anhydride, glutaconic anhydride, diglycolic anhydride, cyclohexanedicarboxylic anhydride, cyclopentanetetracarboxylic dianhydride, and phenylsuccinic anhydride; dicarboxylic acid diester compounds such as dimethyl succinate, diethyl succinate, diallyl succinate, dimethyl maleate, diethyl maleate, diallyl maleate, dipropyl maleate, dibutyl maleate, bis(trifluoromethyl) maleate, bis(pentafluoroethyl) maleate, and bis(2,2,2-trifluoroethyl) maleate; spiro compounds such as 2,4,8,10-teraoxaspiro[5.5]undecane and 3,9-divinyl-2,4,8,10-teraoxaspiro[5.5]undecane; sulfur-containing compounds such as ethylene sulfite, propylene sulfite, 1,3-propanesultone, 1,4-butanesultone, 1,3-propenesultone, 1,4-butenesultone, methyl methanesulfonate, ethyl methanesulfonate, methyl methoxymethanesulfonate, methyl 2-methoxyethanesulfonate, busulfan, diethylene glycol dimethanesulfonate, 1,2-ethanediol bis(2,2,2-trifluoroethanesulfonate), 1,4-butanediol bis(2,2,2-trifluoroethanesulfonate), sulfolane, 3-sulfolene, 2-sulfolene, dimethyl sulfone, diethyl sulfone, divinyl sulfone, diphenyl sulfone, bis(methylsulfonyl)methane, bis(methylsulfonyl)ethane, bis(ethylsulfonyl)methane, bis(ethylsulfonyl)ethane, bis(vinylsulfonyl)methane, bis(vinylsulfonyl)ethane, N,N-dimethylmethanesulfonamide, N,N-diethylmethanesulfonamide, N,N-dimethyltrifluoromethanesulfonamide, and N,N-diethyltrifluoromethanesulfonamide; nitrogen-containing compounds such as 1-methyl-2-pyrrolidinone, 1-methyl-2-piperidone, 3-methyl-2-oxazolidinone, 1,3-dimethyl-2-imidazolidinone, and N-methylsuccinimide; hydrocarbon compounds such as heptane, octane, nonane, decane, cycloheptane, methylcyclohexane, ethylcyclohexane, propylcyclohexane, n-butylcyclohexane, t-butylcyclohexane, and dicyclohexyl; fluorinated benzenes such as fluorobenzene, difluorobenzene, pentafluorobenzene, and hexafluorobenzene; fluorinated toluenes such as 2-fluorotoluene, 3-fluorotoluene, 4-fluorotoluene, and benzotrifluoride; nitrile compounds such as acetonitrile, propionitrile, butyronitrile, malononitrile, succinonitrile, glutaronitrile, adiponitrile, and pimelonitrile; and phosphorus-containing compounds such as methyl dimethylphosphinate, ethyl dimethylphosphinate, ethyl diethylphosphinate, trimethyl phosphonoformate, triethyl phosphonoformate, trimethyl phosphonoacetate, triethyl phosphonoacetate, trimethyl 3-phosphonopropionate, and triethyl 3-phosphonopropionate.

Preferred of these, from the standpoint of improving retention of battery characteristics through high-temperature storage, are sulfur-containing compounds such as ethylene sulfite, 1,3-propanesultone, 1,4-butanesultone, 1,3-propenesultone, 1,4-butenesultone, busulfan, and 1,4-butanediol bis(2,2,2-trifluoroethanesulfonate) and nitrile compounds such as acetonitrile, propionitrile, butyronitrile, malononitrile, succinonitrile, glutaronitrile, adiponitrile, and pimelonitrile.

Two or more of these aids may be used in combination. The content of these aids in the nonaqueous electrolytic solution is not particularly limited. However, the content thereof is preferably 0.01 % by mass or higher, more preferably 0.1% by mass or higher, even more preferably 0.2% by mass or higher, and is preferably 8% by mass or lower, more preferably 5% by mass or lower, even more preferably 3% by mass or lower, especially preferably 1 % by mass or lower.

Addition of those aids is preferred from the standpoint of improving capacity retentivity after high-temperature storage and cycle characteristics. By regulating the concentration of aids to a value not lower than the lower limit, the effects of the aids can be sufficiently produced. By regulating the concentration of aids to a value not higher than the upper limit, battery characteristics including high-load discharge characteristics can be prevented from decreasing.

[5. Process for Producing the Nonaqueous Electrolytic Solution]

The nonaqueous electrolytic solution of the invention can be prepared by dissolving an electrolyte and a compound represented by general formula (3) in a nonaqueous solvent optionally together with other compounds. It is

preferred that prior to the preparation of the nonaqueous electrolytic solution, the ingredients should be dehydrated beforehand in order that the resultant electrolytic solution might have a reduced moisture content. It is desirable that each ingredient be dehydrated to preferably 50 ppm or less, more preferably 30 ppm or less, even more preferably 10 ppm or less. Furthermore, a treatment for dehydration and deacidification or the like may be conducted after preparation of the electrolytic solution.

[6. Mechanism]

The reasons why the nonaqueous electrolytic solution of the invention has excellent safety during overcharge and further has excellent high-temperature continuous-charge characteristics are unclear. However, the reasons are presumed to be as follows, although the invention should not be construed as being limited by the following mechanism.

The compound represented by general formula (3) has a specific sulfur-containing functional group in the molecule. When n is 0, the compound further has, in the molecule, a phenyl group substituted with an alkyl group having 2 or more carbon atoms. When n is 1, the compound further has, in the molecule, a phenyl group substituted with an alkyl group having 5 or more carbon atoms.

In general, the electron-donating properties of alkyl groups are enhanced as the number of carbon atoms of the alkyl group increases. Furthermore, secondary alkyl groups and tertiary alkyl groups have higher electron-donating properties than primary alkyl groups. Consequently, compounds having a phenyl group substituted with an alkyl group having 2 or more carbon atoms have a lower oxidation potential than compounds having a phenyl group having no alkyl substituent. The former compounds hence react in an earlier stage in overcharge and can heighten safety during overcharge.

Compounds having a low oxidation potential usually react on highly active portions of the electrodes even during high-temperature continuous charge, resulting in reduced battery characteristics after the high-temperature continuous charge. However, it is thought that the specific sulfur-containing functional group is adsorbed onto the surface of the positive electrode and the compound represented by general formula (3) can hence be inhibited from undergoing a side reaction with the highly active positive electrode. It is thought that battery characteristics can be thus inhibited from decreasing through high-temperature continuous charge, while enhancing safety during overcharge.

It is thought that especially when the compound represented by general formula (3) has a phenyl group substituted with an alkyl group having 5 or more carbon atoms, this compound can be further inhibited from undergoing a side reaction with the highly active positive electrode by the steric hindrance of the alkyl group. This compound is hence thought to be highly effective in inhibiting battery characteristics from decreasing through high-temperature continuous charge, while enhancing safety during overcharge.

The nonaqueous electrolytic solutions of the invention are suitable for use as nonaqueous electrolytic solutions for secondary batteries among nonaqueous-electrolyte batteries, that is, for nonaqueous-electrolyte secondary batteries, e.g., lithium secondary batteries. A nonaqueous-electrolyte secondary battery employing either of the nonaqueous electrolytic solutions of the invention is explained below.

[III. Lithium Secondary Batteries]

The lithium secondary batteries of the invention are configured of either of the nonaqueous electrolytic solutions of the invention described above and a positive electrode and a negative electrode which are capable of occluding and releasing lithium ions. The lithium secondary batteries of the invention may have other configurations. For example, the lithium secondary batteries usually are equipped with a spacer.

[1. Positive Electrode]

Any desired positive electrode which is capable of occluding and releasing lithium can be used unless this electrode considerably lessens the effects of the invention.

Usually, a structure configured of a current collector and a positive-electrode active-material layer disposed thereon is used as a positive electrode. The positive electrode may suitably have other layers.

[1-1. Positive-Electrode Active-Material Layer]

The positive-electrode active-material layer includes a positive-electrode active material. The kind of positive-electrode active material is not particularly limited so long as the active material is capable of occluding and releasing lithium ions. Examples thereof include oxides of transition metals such as Fe, Co, Ni, and Mn, composite oxides of a transition metal and lithium, and sulfides of transition metals.

Examples of the oxides of transition metals include MnO, $V_2O_5$, $V_6O_{13}$, and $TiO_2$. Examples of the composite

oxides of a transition metal and lithium include: lithium-nickel composite oxides having the basic composition $LiNiO_2$, etc.; lithium-cobalt composite oxides having the basic composition $LiCoO_2$, etc.; and lithium-manganese composite oxides having the basic compositions $LiMnO_2$ and $LiMnO_4$, etc. Examples of the sulfides of transition metals include $TiS_2$ and FeS.

Of these, the composite oxides of lithium and a transition metal are preferred because these composite oxides enable the lithium secondary battery to combine high capacity and high cycle characteristics. Especially preferred in the invention are transition metal oxides containing lithium and nickel. Examples thereof include $LiNiO_2$ and $LiNi_xM_yO_2$ (M is at least one member selected from Al, B, Ti, Zr, V, Cr, Mn, Fe, Co, Cu, Zn, Mg, Ca, and Ga; and x and y represent any desired numbers). M especially preferably is Co, Mn, Fe, Al, Mg, and Ti. In particular, Mn alone and Co-Mn, Co-Al, and Co-Al-Mg combinations are effective in improving thermal stability.

Specifically, $LiNi_{1-a-b}Mn_aCo_bO_2$ (a and b each represent a number of 0 or greater but less than 1) and $LiNi_{1-c-d}Co_aAl_dMg_eO_2$ (c, d, and e each represent a number of 0 or greater but less than 1) are preferred. More preferred are $LiNi_{1-a-b}Mn_aCo_bO_2$ ($0 \le a < 0.4$ and $0 \le b < 0.4$) and $LiNi_{1-c-d}Co_aAl_dMg_eO_2$ ($0 \le c < 0.3$, $0 \le d < 0.1$, and $0 \le e < 0.05$). Especially preferred are $LiNi_{1/3}Mn_{1/3}Co_{1/3}O2$, $LiNi_{0.5}Mn_{0.3}CO_{0.2}O_2$, $LiNi_{0.5}Mn_{0.5}O_2$, $LiNi_{0.85}Co_{0.10}Al_{0.05}O_2$, and $LiNi_{0.85}CO_{0.10}Al_{0.03}Mg_{0.02}O_2$.

To coat the surface of the transition metal/lithium composite oxides described above with an oxide of any of metals, e.g., Al, B, Ti, Zr, V, Cr, Mn, Fe, Co, Ni, Cu, Zn, Mg, Ca, and Ga, is preferred because this coating inhibits the solvent from undergoing an oxidation reaction at high voltages. $AlO_3$, $TiO_2$, $ZrO_2$, and MgO are especially preferred of these because these oxides have high strength and produce a stable covering effect.

Any one of these positive-electrode active materials may be used alone, or two or more thereof may be used in any desired combination and proportion.

The positive-electrode active material may have any desired specific surface area unless the effects of the invention are considerably lessened thereby. However, the specific surface area thereof is usually preferably 0.1 $m^2/g$ or larger, more preferably 0.2 $m^2/g$ or larger, and is usually preferably 10 $m^2/g$ or smaller, more preferably 5.0 $m^2/g$ or smaller, even more preferably 3.0 $m^2/g$ or smaller.

By regulating the specific surface area of the positive-electrode active material to a value not smaller than the lower limit, rate characteristics and capacity can be improved. By regulating the specific surface area of the positive-electrode active material to a value not larger than the upper limit, the positive-electrode active material can be prevented from undergoing an undesirable reaction with the nonaqueous electrolytic solution or with other substances and cycle characteristics can be improved.

Furthermore, the positive-electrode active material may have any desired average secondary-particle diameter unless the effects of the invention are considerably lessened thereby. However, the average secondary-particle diameter thereof is usually preferably 0.2 μm or greater, more preferably 0.3 μm or greater, and is usually preferably 20 μm or less, more preferably 10 μm or less.

By regulating the average secondary-particle diameter of the positive-electrode active material to a value not less than the lower limit, the lithium secondary battery is inhibited from suffering cycle deterioration. In addition, such positive-electrode active material is easy to handle. By regulating the average secondary-particle diameter of the positive-electrode active material to a value not greater than the upper limit, the internal resistance of the battery is prevented from increasing, and there are cases where the battery becomes less apt to output a voltage.

The positive-electrode active-material layer may have any desired thickness unless the effects of the invention are considerably lessened thereby. However, the thickness thereof is usually preferably 1 μm or more, more preferably 10 μm or more, even more preferably 20 μm or more, most preferably 40 μm or more. The thickness thereof is usually preferably 200 μm or less, more preferably 150 μm or less, even more preferably 100 μm or less.

When the thickness of the positive-electrode active-material layer is regulated to a value not less than the lower limit, not only application of a coating fluid is easy and evenness is easy to ensure, but also sufficient capacity is imparted to the lithium secondary battery. By regulating the thickness of the positive-electrode active-material layer to a value not more than the upper limit, rate characteristics can be prevented from decreasing.

The positive-electrode active-material layer can be produced, for example, by slurrying the positive-electrode active material described above and a binder with a solvent optionally together with various aids and other ingredients to obtain a coating fluid, applying the coating fluid to a current collector, and drying the coating.

Alternatively, use may be made, for example, of a method in which the positive-electrode active material described above is formed into a sheet electrode by rolling or is compression-molded into a pellet electrode.

The case in which a slurry is applied to a positive-electrode current collector and dried is explained.

The kind of binder is not particularly limited so long as the binder is a material which is stable to the nonaqueous solvent used in the nonaqueous electrolytic solution and to the solvent to be used for electrode production. It is, however, preferred to select a binder while taking account of weatherability, chemical resistance, heat resistance, flame retardancy, etc.

Usable examples thereof include: inorganic compounds such as silicates and water glass; alkane polymers

such as polyethylene, polypropylene, and poly(1,1-dimethylethylene); unsaturated polymers such as polybutadiene and polyisoprene; polymers having rings, such as polystyrene, polymethylstyrene, polyvinylpyridine, and poly(N-vinylpyrrolidone); acrylic derivative polymers such as poly(methyl methacrylate), poly(ethyl methacrylate), poly(butyl methacrylate), poly(methyl acrylate), poly(ethyl acrylate), poly(acrylic acid), poly(methacrylic acid), and polyacrylamide; fluororesins such as poly(vinyl fluoride), poly(vinylidene fluoride), and polytetrafluoroethylene; polymers containing CN groups, such as polyacrylonitrile and poly(vinylidene cyanide); poly(vinyl alcohol)-based polymers such as poly(vinyl acetate) and poly(vinyl alcohol); halogen-containing polymers such as poly(vinyl chloride) and poly(vinylidene chloride); and conductive polymers such as polyaniline.

Also usable are mixtures, modifications, derivatives, random copolymers, alternating copolymers, graft copolymers, block copolymers, and the like of the polymers and compounds shown above.

Preferred of these binders are fluororesins and polymers containing CN groups.

One binder may be used alone, or two or more binders may be used in any desired combination and proportion.

In the case where a resin is used as a binder, the resin may have any desired weight-average molecular weight unless the effects of the invention are considerably lessened thereby. However, the weight-average molecular weight thereof is usually desirably 10,000 or higher, preferably 100,000 or higher, and is usually preferably 3,000,000 or lower, more preferably 1,000,000 or lower.

By using a resin having a weight-average molecular weight not lower than the lower limit, sufficient strength can be imparted to the electrode. On the other hand, by using a resin having a weight-average molecular weight not higher than the upper limit, the coating fluid is inhibited from increasing in viscosity and electrode formation can be facilitated.

The amount of the binder to be used is not limited unless the effects of the invention are considerably lessened. However, the amount thereof per 100 parts by weight of the positive-electrode active material (when an active material is used for negative electrodes, the material is referred to as "negative-electrode active material" (hereinafter, when a positive-electrode active material and a negative-electrode active material are referred to without being distinguished from each other, these materials are simply called "active materials") is usually preferably 0.1 part by weight or more, more preferably 1 part by weight or more. The amount thereof is usually preferably 30 parts by weight or less, more preferably 20 parts by weight or less.

By regulating the amount of the binder to a value not less than the lower limit, sufficient strength can be imparted to the electrode. By regulating the amount of the binder to a value not greater than the upper limit, ionic conductivity can be improved.

Various aids and the like may be incorporated into the electrode as stated above. Examples of the aids and the like include conductive materials for enhancing the electrical conductivity of the electrode and reinforcing materials for improving the mechanical strength of the electrode.

The conductive materials are not particularly limited so long as the materials, when mixed in an appropriate amount with an active material, can impart electrical conductivity. Examples thereof usually include carbon powders such as acetylene black, carbon black, and graphite and fibers and foils of various metals.

With respect to examples of the reinforcing materials, use can be made of various kinds of inorganic or organic fillers which are spherical or fibrous.

One of these aids and the like may be used alone, or two or more thereof may be used in any desired combination and proportion.

The solvent to be used for forming a slurry is not particularly limited in the kind thereof, so long as the active material, the binder, and the aids and the like which are optionally used can be dissolved or dispersed therein. Either an aqueous solvent or an organic solvent may be used.

Examples of the aqueous solvent include water and alcohols.

Examples of the organic solvent include N-methylpyrrolidone (NMP), dimethylformamide, dimethylacetamide, methyl ethyl ketone, cyclohexanone, methyl acetate, methyl acrylate, diethyltriamine, N-N-dimethylaminopropylamine, ethylene oxide, tetrahydrofuran (THF), toluene, acetone, dimethyl ether, dimethylacetamide, hexamethylphospharamide, dimethyl sulfoxide, benzene, xylene, quinoline, pyridine, methylnaphthalene, and hexane.

One of these solvents may be used alone, or two or more thereof may be used in any desired combination and proportion.

It is preferred that the active-material layer obtained by coating-fluid application and drying should be pressed and densified with a roller press or the like in order to heighten the packing density of the positive-electrode active material.

[1-2. Current Collector]

As the material of the current collector, a known material can be used at will. However, a metal or an alloy is usually employed. Specific examples thereof for the current collector of the positive electrode include aluminum, nickel, and SUS (stainless steel). Of these, aluminum is preferred as the current collector of the positive electrode. One of these

materials may be used alone, or two or more thereof may be used in any desired combination and proportion.

It is preferred that the surface of each of those current collectors should be subjected beforehand to a surface-roughening treatment for the purpose of improving bonding between the current collector and the active-material layer to be formed on the surface thereof. Examples of techniques for the surface roughening include a method in which the current collector is, for example, subjected to blasting or rolled with a roll having a roughened surface, a mechanical grinding method in which the surface of the current collector is ground with an abrasive cloth or paper to which abrasive grains have been adhered or with a grindstone, an emery wheel, a wire brush equipped with steel bristles, or the like, an electrolytic grinding method, and a chemical grinding method.

The current collector may have any desired shape. For example, it is possible to use a current collector of the type having holes, such as an expanded metal or a punching metal, in order to reduce the weight of the battery, i.e., in order to improve energy density per unit weight. In this case, the weight of the current collector can be freely changed by changing the percentage of openings thereof.

In the case where a coating layer is formed on each of both surfaces of a current collector of the type having holes, the coating layers tend to be even less apt to peel off because of the riveting effect of the coating layers connected to each other through the holes. However, in case where the percentage of openings is too high, the area of contact between each coating layer and the current collector is small and this results in reduced, rather than increased, adhesion strength.

In the case where a thin film is used as a positive-electrode current collector, this thin film may have any desired thickness unless the effects of the invention are considerably lessened thereby. However, the thickness thereof is usually preferably 1 μm or more, more preferably 5 μm or more, and is usually preferably 100 μm or less, more preferably 50 μm or less.

By using a thin film having a thickness not more than the upper limit, the battery as a whole is made to have sufficient capacity. When a thin film having a thickness not less than the lower limit is used, this thin film is easy to handle.

[2. Negative Electrode]

Any desired negative electrode which is capable of occluding and releasing lithium can be used unless this electrode considerably lessens the effects of the invention.

Usually, a structure configured of a current collector and a negative-electrode active-material layer disposed thereon is used as a negative electrode, as in the case of the positive electrode. Like the positive electrode, the negative electrode also may suitably have other layers.

[2-1. Negative-Electrode Active Material]

The negative-electrode active material is not particularly limited so long as the active material is capable of occluding and releasing lithium ions, and any desired known negative-electrode active material can be used. For example, it is preferred to use carbonaceous materials such as coke, acetylene black, mesophase microbeads, and graphite, lithium metal, lithium alloys such as lithium-silicon and lithium-tin, and the like.

Lithium alloys are especially preferred from the standpoints of high capacity per unit weight and satisfactory safety. From the standpoints of satisfactory cycle characteristics and satisfactory safety, it is especially preferred to use a carbonaceous material.

One negative-electrode active material may be used alone, or two or more negative-electrode active materials may be used in any desired combination and proportion.

The negative-electrode active material may have any desired particle diameter unless the effects of the invention are considerably lessened thereby. However, the particle diameter thereof is usually preferably 1 μm or more, more preferably 15 μm or more, and is usually preferably 50 μm or less, more preferably 30 μm or less, from the standpoint that such a particle diameter brings about excellent battery characteristics including initial efficiency, rate characteristics, and cycle characteristics.

Furthermore, the following materials also are suitable for use as carbonaceous materials: a material obtained by coating any of those carbonaceous materials with an organic substance, e.g., a pitch, and then burning the coated material; a material obtained from any of those carbonaceous materials by depositing, on the surface thereof, carbon which is more amorphous than the carbonaceous material by a technique such as CVD; and the like.

Examples of the organic substance to be used for the coating include: coal-tar pitches ranging from soft pitch to hard pitch; coal-derived heavy oils such as the oil obtained by dry distillation and liquefaction; straight-run heavy oils such as topping residues and vacuum distillation residues; and petroleum-derived heavy oils such as the cracking heavy oil (e.g., ethylene heavy end) which is obtained as a by-product of thermal cracking of crude oil, naphtha, etc.

Also usable are materials obtained by distilling those heavy oils at 200-400°C and pulverizing the resultant solid residues to 1-100 μm. Furthermore, vinyl chloride resins, phenolic resins, imide resins, and the like are also usable.

Any of the negative-electrode active materials described above may, for example, be formed into a sheet electrode by rolling or formed into a pellet electrode by compression molding. However, a negative-electrode active-material layer can usually be produced, for example, by slurrying the negative-electrode active material described above and a binder with a solvent optionally together with various aids and other ingredients to obtain a coating fluid, applying the coating fluid to a current collector, and drying the coating, as in the case of the positive-electrode active-material layer. The solvent for slurry formation, the binder, and the aids, etc. may be the same as those described above with regard to the positive-electrode active material.

[2-2. Current Collector]

As the material of the current collector of the negative electrode, a known material can be used at will. However, metallic materials such as, for example, copper, nickel, and SUS are used. Of these, copper is especially preferred from the standpoint of processability and cost.
It is preferred that the current collector of the negative electrode also should be subjected beforehand to a surface-roughening treatment like the current collector of the positive electrode. Furthermore, the current collector may have any desired shape as in the case of the positive electrode, and a current collector of the type having holes, such as an expanded metal or a punching metal, can be used. Moreover, in the case where a thin film is used as a current collector, the preferred thickness thereof also is the same as in the case of the positive electrode.

[3. Spacer]

A spacer is usually interposed between the positive electrode and the negative electrode in order to prevent short-circuiting. The material and shape of the spacer are not particularly limited. However, it is preferred to use a spacer which is stable to the nonaqueous electrolytic solutions described above, has excellent liquid-holding properties, and is capable of preventing short-circuiting between the electrodes without fail.
With respect to the material of the spacer, use can be made, for example, of polyolefins such as polyethylene and polypropylene, polytetrafluoroethylene, polyethersulfones, and the like. Of these, polyolefins are preferred.
With respect to the shape of the spacer, a porous spacer is preferred. In this case, a nonaqueous electrolytic solution is used in the state of being infiltrated into the porous spacer.
The spacer may have any desired thickness unless the effects of the invention are considerably lessened thereby. However, the thickness thereof is usually preferably 1 μm or more, more preferably 5 μm or more, even more preferably 10 μm or more. The thickness thereof is usually preferably 50 μm or less, more preferably 40 μm or less, even more preferably 30 μm or less.
By regulating the thickness of the spacer to a value not less than the lower limit, insulating properties and mechanical strength can be sufficiently ensured. By regulating the thickness of the spacer to a value not greater than the upper limit, not only battery performance including rate characteristics can be sufficiently ensured but also the energy density of the battery as a whole can be prevented from decreasing.
In the case where a porous film is used as a spacer, this spacer may have any desired porosity unless the effects of the invention are considerably lessened thereby. However, the porosity thereof is usually preferably 20% or higher, more preferably 35% or higher, even more preferably 45% or higher. The porosity thereof is usually preferably 90% or lower, more preferably 85% or lower, even more preferably 75% or lower.
By regulating the porosity of the spacer to a value not lower than the lower limit, film resistance can be reduced and rate characteristics can be improved. By regulating the porosity of the spacer to a value not higher than the upper limit, mechanical strength of the film can be ensured and insulating properties can be improved.
Furthermore, in the case where a porous film is used as a spacer, this spacer may have any desired average pore diameter unless the effects of the invention are considerably lessened thereby. However, the average pore diameter thereof is usually preferably 0.5 μm or less, more preferably 0.2 μm or less, and is usually preferably 0.05 μm or more.
By regulating the average pore diameter of the spacer to a value not more than the upper limit, short-circuiting can be prevented. By regulating the average pore diameter of the spacer to a value not less than the lower limit, film resistance can be reduced and rate characteristics can be improved.

[4. Fabrication of the Secondary Batteries]

The lithium secondary batteries of the invention are produced by assembling either of the nonaqueous electrolytic solutions according to the invention described above, a positive electrode, a negative electrode, and a spacer, which is used according to need, into a suitable shape. According to need, it is possible to use other constituent elements, e.g., an outer case.
The shapes of the lithium secondary batteries of the invention are not particularly limited, and can be suitably

selected, according to the uses of the batteries, from various shapes in general use. Examples thereof include coin type batteries, cylindrical batteries, and prismatic batteries. Methods for battery fabrication also are not particularly limited, and a suitable method can be selected from various methods in common use according to the desired battery shape.

[EXAMPLE 1]

The invention will be explained below in more detail by reference to Examples and Comparative Examples. However, the invention should not be construed as being limited to the following Examples and Comparative Examples, and the invention can be modified at will unless the modifications depart from the spirit of the invention.
First, Examples of one nonaqueous electrolytic solution (aspect I) of the invention are described.

<Explanation of Test Procedures>

[Production of Positive Electrode]

A composition obtained by mixing 94 parts by weight of a lithium-nickel-cobalt-manganese composite oxide ($LiNi_{1/3}CO_{1/3}Mn_{1/3}O_2$) as a positive-electrode active material with 3 parts by weight of poly(vinylidene fluoride) (hereinafter suitably referred to as "PVdF") and 3 parts by weight of acetylene black and slurrying the mixture by adding N-methylpyrrolidone thereto was applied to each surface of a current collection made of aluminum. The resultant coating was dried to obtain a positive electrode.

[Production of Negative Electrode]

A composition obtained by mixing 94 parts by weight of a graphite powder as a negative-electrode active material with 6 parts by weight of PVdF and slurrying the mixture by adding N-methylpyrrolidone thereto was applied to one surface of a current collector made of copper. The resultant coating was dried to obtain a negative electrode.

[Production of Lithium Secondary Battery]

The positive electrode, the negative electrode, and a separator made of polyethylene were stacked in the order of negative electrode/separator/positive electrode/separator/negative electrode. The battery element thus obtained was wrapped in a cylindrical aluminum-laminated film, and the electrolytic solution which will be described later was injected thereinto. Thereafter, the cylindrical film was vacuum-sealed to produce a sheet-form nonaqueous-electrolyte secondary battery. Furthermore, this sheet-form battery was sandwiched between glass plates and thereby pressed in order to enhance close contact between the electrodes.

[Capacity Evaluation Test]

In a 25˚C thermostatic chamber, the battery was subjected to constant-current constant-voltage charge (hereinafter suitably referred to as "CCCV charge") to 4.2 V at a current corresponding to 0.2 C and then discharged at 0.2 C to 3 V. This operation was repeated three times to conduct initial formation. Subsequently, the battery was subjected to CCCV charge at 0.2 C to 4.2 V and then discharged again at 0.5 C to 3 V, and the initial discharge capacity was determined. The cutoff current during charge was set at 0.05 C.
Here, "1 C" means the current value at which the reference capacity of the battery is discharged over 1 hour. For example, 0.2 C is 1/5 the current value.

[Test for Evaluating Overcharge Characteristics]

The battery which had undergone the capacity evaluation was subjected to CCCV charge at 0.2 C to 4.2 V in a 25˚C thermostatic chamber. This battery was then transferred to a 45˚C thermostatic chamber, in which the battery began to be overcharged at a current of 1 C. At the time when a voltage of 5 V had been reached, the voltage application was stopped. This battery was cooled to 25˚C and immediately immersed in an ethanol bath to measure the buoyancy (Archimedes' principle). Thus, the amount of an evolved gas was determined.

[Test for Evaluating Storability]

The battery which had undergone the capacity evaluation was charged at 0.2 C to 4.2 V in a 25˚C thermostatic chamber and then stored in an 85˚C high-temperature chamber for 3 days. Thereafter, the battery was taken out,

subsequently subjected to CCCV charge at 0.2 C to 4.2 V, and then discharged at 0.5 C to 3 V to determine the capacity of the stored battery. The percentage recovery of capacity was determined from the discharge capacity as determined before the storage and that determined after the storage, using the following calculation formula.

$$\text{Percentage recovery of capacity (\%)} = \text{(discharge capacity after storage (mAh/g))/(initial discharge capacity (mAh/g))}$$

<EXAMPLE 1>

$LiPF_6$, which is an electrolyte, was dissolved in a proportion of 1 mol/L in a mixed solvent composed of ethylene carbonate (EC), which is a saturated cyclic carbonate, and dimethyl carbonate (DMC) and ethyl methyl carbonate (EMC), which are linear carbonates, (volume ratio, 2:7:1). Furthermore, 4-fluorophenyl acetate and vinylene carbonate (VC) were added each in an amount of 2% by weight based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 2>

$LiPF_6$, which is an electrolyte, was dissolved in a proportion of 1 mol/L in a mixed solvent composed of ethylene carbonate (EC) and propylene carbonate (PC), which are saturated cyclic carbonates, and dimethyl carbonate (DMC), which is a linear carbonate, (volume ratio, 2:1:7). Furthermore, 4-fluorophenyl acetate and vinylene carbonate (VC) were added each in an amount of 2% by weight based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 3>

$LiPF_6$, which is an electrolyte, was dissolved in a proportion of 1 mol/L in a mixed solvent composed of ethylene carbonate (EC), which is a saturated cyclic carbonate, and dimethyl carbonate (DMC) and ethyl methyl carbonate (EMC), which are linear carbonates, (volume ratio, 2:7:1). Furthermore, 4-fluorophenyl acetate and vinylene carbonate (VC) were added in amounts of 4% by weight and 2% by weight, respectively, based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 4>

$LiPF_6$, which is an electrolyte, was dissolved in a proportion of 1 mol/L in a mixed solvent composed of ethylene carbonate (EC) and fluoroethylene carbonate (FEC), which are saturated cyclic carbonates, and dimethyl carbonate (DMC) and ethyl methyl carbonate (EMC), which are linear carbonates, (volume ratio, 1:1:7:1). Furthermore, 4-fluorophenyl acetate, vinylene carbonate (VC), and vinylethylene carbonate (VEC) were added in amounts of 4% by weight, 1% by weight, and 0.5% by weight, respectively, based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 5>

$LiPF_6$, which is an electrolyte, was dissolved in a proportion of 1 mol/L in a mixed solvent composed of ethylene

carbonate (EC) and fluoroethylene carbonate (FEC), which are saturated cyclic carbonates, and dimethyl carbonate (DMC) and ethyl methyl carbonate (EMC), which are linear carbonates, (volume ratio, 1:1:7:1). Furthermore, 4-fluorophenyl acetate was added in an amount of 2% by weight based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 6>

$LiPF_6$, which is an electrolyte, was dissolved in a proportion of 1 mol/L in a mixed solvent composed of ethylene carbonate (EC), which is a saturated cyclic carbonate, and dimethyl carbonate (DMC) and ethyl methyl carbonate (EMC), which are linear carbonates, (volume ratio, 3:5:2). Furthermore, 2-fluorophenyl acetate and vinylene carbonate (VC) were added in amounts of 2% by weight and 1% by weight, respectively, based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 7>

$LiPF_6$, which is an electrolyte, was dissolved in a proportion of 1 mol/L in a mixed solvent composed of ethylene carbonate (EC), which is a saturated cyclic carbonate, and dimethyl carbonate (DMC) and ethyl methyl carbonate (EMC), which are linear carbonates, (volume ratio, 3:5:2). Furthermore, 3-fluorophenyl acetate and vinylene carbonate (VC) were added in amounts of 2% by weight and 1% by weight, respectively, based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 8>

$LiPF_6$, which is an electrolyte, was dissolved in a proportion of 1 mol/L in a mixed solvent composed of ethylene carbonate (EC), which is a saturated cyclic carbonate, and dimethyl carbonate (DMC) and ethyl methyl carbonate (EMC), which are linear carbonates, (volume ratio, 3:5:2). Furthermore, 2,4-difluorophenyl acetate and vinylene carbonate (VC) were added in amounts of 2% by weight and 1% by weight, respectively, based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 9>

$LiPF_6$, which is an electrolyte, was dissolved in a proportion of 1 mol/L in a mixed solvent composed of ethylene carbonate (EC), which is a saturated cyclic carbonate, and dimethyl carbonate (DMC) and ethyl methyl carbonate (EMC), which are linear carbonates, (volume ratio, 3:5:2). Furthermore, 2,3,4-trifluorophenyl acetate and vinylene carbonate (VC) were added in amounts of 2% by weight and 1% by weight, respectively, based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 10>

$LiPF_6$, which is an electrolyte, was dissolved in a proportion of 1.2 mol/L in a mixed solvent composed of ethylene carbonate (EC), which is a saturated cyclic carbonate, and ethyl methyl carbonate (EMC) and diethyl carbonate (DMC), which are linear carbonates, (volume ratio, 2:5:3). Furthermore, 4-trifluoromethylphenyl acetate and vinylene carbonate (VC) were added each in an amount of 2% by weight based on the weight of the whole electrolytic solution.

Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 11>

$LiPF_6$, which is an electrolyte, was dissolved in a proportion of 1.2 mol/L in a mixed solvent composed of ethylene carbonate (EC), which is a saturated cyclic carbonate, and ethyl methyl carbonate (EMC) and diethyl carbonate (DMC), which are linear carbonates, (volume ratio, 2:5:3). Furthermore, 3,4-difluorophenyl acetate and vinylene carbonate (VC) were added each in an amount of 2% by weight based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 12>

$LiPF_6$, which is an electrolyte, was dissolved in a proportion of 1 mol/L in a mixed solvent composed of ethylene carbonate (EC) and fluoroethylene carbonate (FEC), which are saturated cyclic carbonates, dimethyl carbonate (DMC), which is a linear carbonate, and ethyl propionate (EP), which is an aliphatic carboxylic acid ester, (volume ratio, 1:1:2:5). Furthermore, 4-fluorophenyl acetate and vinylene carbonate (VC) were added each in an amount of 2% by weight based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 13>

$LiPF_6$, which is an electrolyte, was dissolved in a proportion of 1 mol/L in a mixed solvent composed of ethylene carbonate (EC) and fluoroethylene carbonate (FEC), which are saturated cyclic carbonates, dimethyl carbonate (DMC), which is a linear carbonate, and fluorobenzene (PhF), which is another organic solvent, (volume ratio, 10:10:75:5). Furthermore, 4-fluorophenyl acetate and lithium difluorophosphate ($LiPO_2F_2$) were added in amounts of 2% by weight and 0.5% by weight, respectively, based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 14>

$LiPF_6$, which is an electrolyte, was dissolved in a proportion of 1 mol/L in a mixed solvent composed of ethylene carbonate (EC), which is a saturated cyclic carbonate, and dimethyl carbonate (DMC) and ethyl methyl carbonate (EMC), which are linear carbonates, (volume ratio, 2:7:1). Furthermore, 4-fluorophenyl acetate and 1,3-propanesultone (PS) were added in amounts of 2% by weight and 1% by weight, respectively, based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<EXAMPLE 15>

$LiPF_6$, which is an electrolyte, was dissolved in a proportion of 1 mol/L in a mixed solvent composed of ethylene carbonate (EC), which is a saturated cyclic carbonate, and dimethyl carbonate (DMC) and ethyl methyl carbonate (EMC), which are linear carbonates, (volume ratio, 2:7:1). Furthermore, 4-fluorophenyl acetate and ethylene sulfite (ES) were added in amounts of 2% by weight and 1% by weight, respectively, based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The

results thereof are shown in Table 1.

<EXAMPLE 16>

$LiPF_6$, which is an electrolyte, was dissolved in a proportion of 1 mol/L in a mixed solvent composed of ethylene carbonate (EC), which is a saturated cyclic carbonate, and dimethyl carbonate (DMC) and ethyl methyl carbonate (EMC), which are linear carbonates, (volume ratio, 2:7:1). Furthermore, 4-fluorophenyl acetate and 1,3-propenesultone (PRES) were added in amounts of 2% by weight and 1% by weight, respectively, based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<COMPARATIVE EXAMPLE 1>

$LiPF_6$, which is an electrolyte, was dissolved in a proportion of 1 mol/L in a mixed solvent composed of ethylene carbonate (EC), which is a saturated cyclic carbonate, dimethyl carbonate (DMC), which is a linear carbonate, and trimethyl phosphate (TMP), which is another organic solvent, (volume ratio, 2:7: 1). Furthermore, 4-fluorophenyl acetate and vinylene carbonate (VC) were added each in an amount of 2% by weight based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<COMPARATIVE EXAMPLE 2>

$LiPF_6$, which is an electrolyte, was dissolved in a proportion of 1 mol/L in a mixed solvent composed of ethylene carbonate (EC), which is a saturated cyclic carbonate, and dimethyl carbonate (DMC) and ethyl methyl carbonate (EMC), which are linear carbonates, (volume ratio, 2:7:1). Furthermore, vinylene carbonate (VC) was added in an amount of 2% by weight based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<COMPARATIVE EXAMPLE 3>

$LiPF_6$, which is an electrolyte, was dissolved in a proportion of 1 mol/L in a mixed solvent composed of ethylene carbonate (EC), which is a saturated cyclic carbonate, and dimethyl carbonate (DMC) and ethyl methyl carbonate (EMC), which are linear carbonates, (volume ratio, 2:7:1). Furthermore, pentafluorophenyl acetate and vinylene carbonate (VC) were added each in an amount of 2% by weight based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

<COMPARATIVE EXAMPLE 4>

$LiPF_6$, which is an electrolyte, was dissolved in a proportion of 1 mol/L in a mixed solvent composed of ethylene carbonate (EC), which is a saturated cyclic carbonate, and dimethyl carbonate (DMC) and ethyl methyl carbonate (EMC), which are linear carbonates, (volume ratio, 2:7:1). Furthermore, 4-fluorophenyl acetate and vinylene carbonate (VC) were added in amounts of 12% by weight and 2% by weight, respectively, based on the weight of the whole electrolytic solution. Thus, a nonaqueous electrolytic solution was prepared. Using the nonaqueous electrolytic solution obtained, a lithium secondary battery was produced in accordance with the method described above. This battery was subjected to the capacity evaluation test, the test for evaluating overcharge characteristics, and the test for evaluating storability. The results thereof are shown in Table 1.

[Table 1]

| | Fluorine-substituted aromatic ester compound (wt%) | Other additive(s) (wt%) | Composition of electrolytic Solution (volume ratio) | Amount of gas evolved in overcharge test (mL) | Capacity retention after storage test (%) |
|---|---|---|---|---|---|
| Example 1 | 4-fluorophenyl acetate (2) | VC (2) | 1M $LiPF_6$ /EC+DMC+EMC(2:7: 1) | 0.91 | 80.6 |
| Example 2 | 4-fluorophenyl acetate (2) | VC (2) | 1M $LiPF_6$ /EC+PC+DMC(2:1:7) | 0.86 | 79.1 |
| Example 3 | 4-fluorophenyl acetate (4) | VC (2) | 1M $LiPF_6$ /EC+DMC+EMC(2:7: 1) | 1.43 | 79.0 |
| Example 4 | 4-fluorophenyl acetate (4) | VC + VEC (1) (0.5) | 1M $LiPF_6$ /EC+FEC+DMC+EMC (1:1:7:1) | 1.36 | 77.0 |
| Example 5 | 4-fluorophenyl acetate (2) acetate | none | 1M $LiPF_6$ /EC+FEC+DMC+EMC (1:1:7:1) | 0.85 | 76.4 |
| Example 6 | 2-fluorophenyl (2) | VC (1) | 1M $LiPF_6$ /EC+DMC+EMC(3:5: 2) | 0.88 | 81.3 |
| Example 7 | 3-fluorophenyl acetate (2) | VC (1) | 1M $LiPF_6$ /EC+DMC+EMC(3:5: 2) | 0.86 | 80.6 |
| Example 8 | 2,4-difluorophenyl acetate (2) | VC (1) | 1M $LiPF_6$ /EC+DMC+ENC(3:5:2) | 0.83 | 82.7 |
| Example 9 | 2,3,4-trifluorophenyl acetate (2) | VC (1) | 1M $LiPF_6$ /EC+DMC+EMC(3:5: 2) | 0.81 | 83.5 |
| Example 10 | 4- trifluoromethylphenyl acetate (2) | VC (2) | 1.2M $LiPF_6$ /EC+EMC+DEC(2:5:3) | 0.65 | 75.8 |
| Example 11 | 3,4-difluorophenyl acetate (2) | VC (2) | 1.2M $LiPF_6$ /EC+EMC+DEC(2:5:3) | 0.76 | 81.6 |
| Example 12 | 4-fluorophenyl acetate (2) | VC (2) | 1M $LiPF_6$ /EC+FEC+DMC+EP (1:1:2:5) | 0.94 | 82.3 |
| Example 13 | 4-fluorophenyl acetate (2) | $LiPO_2F_2$ (0.5) | 1M $LiPF_6$ /EC+FEC+DMC+PhF (10:10:75: 5) | 0.81 | 82.1 |
| Example 14 | 4-fluorophenyl acetate (2) | PS (1) | 1M $LiPF_6$ /EC+DMC+EMC(2:7: 1) | 0.92 | 83.4 |
| Example 15 | 4-fluorophenyl acetate (2) | ES (1) | 1M $LiPF_6$ /EC+DMC+EMC(2:7: 1) | 0.95 | 82.2 |

(continued)

| | Fluorine-substituted aromatic ester compound (wt%) | Other additive(s) (wt%) | Composition of electrolytic Solution (volume ratio) | Amount of gas evolved in overcharge test (mL) | Capacity retention after storage test (%) |
|---|---|---|---|---|---|
| Example 16 | 4-fluorophenyl acetate (2) | PRES (1) | 1M $LiPF_6$ /EC+DMC+EMC(2:7:1) | 0.92 | 82.6 |
| Comparative Example 1 | 4-fluorophenyl acetate (2) | VC (2) | 1M $LiPF_6$ /EC+DMC+TMP(2:7:1) | 0.48 | 59.7 |
| Comparative Example 2 | none | VC (2) | 1M $LiPF_6$ /EC+DMC+EMC(2:7:1) | 0.17 | 76.3 |
| Comparative Example 3 | pentafluorophenyl acetate (2) | VC (2) | 1M $LiPF_6$ /EC+DMC+EMC(2:7:1) | 0.18 | 66.4 |
| Comparative Example 4 | 4-fluorophenyl acetate (12) | VC (2) | 1M $LiPF_6$ /EC+DMC+EMC(2:7:1) | 0.43 | 65.7 |

As shown in Table 1, it was demonstrated that when the nonaqueous electrolytic solutions of Examples 1 to 16 according to the invention are used, it is possible to attain both safety and storability, as compared with the case in which the nonaqueous organic solvent includes at least one member selected from the group consisting of saturated cyclic carbonates, linear carbonates, and aliphatic carboxylic acid esters, in a concentration of 90% by volume or less in terms of total proportion thereof (Comparative Example 1), the case in which the nonaqueous organic solvent contains no fluorine-substituted aromatic ester compound represented by general formula (1) (Comparative Example 2), the case in which the nonaqueous organic solvent contains a fluorine-substituted aromatic ester compound that is not a fluorine-substituted aromatic ester compound represented by general formula (1) (Comparative Example 3), and the case in which the nonaqueous electrolytic solution contains a fluorine-substituted aromatic ester compound represented by general formula (1) in a concentration exceeding 10% by weight (Comparative Example 4).

Namely, in the nonaqueous electrolytic solutions according to the invention, a large amount of a gas is evolved in the initial stage (voltage, 5 V) in overcharge. Consequently, in batteries equipped with a device which detects the internal pressure and breaks the electric current, it is possible to stop current supply in a safer stage and, hence, the overcharge does not result in smoking or firing. With respect to storability also, a significant improvement in capacity retention has been simultaneously attained.

Next, Examples of another nonaqueous electrolytic solution (aspect II) of the invention are described.

<Explanation of Test Procedures>

[Capacity Evaluation]

At 25˚C, a sheet-form nonaqueous-electrolyte secondary battery which was in the state of being sandwiched between glass plates in order to enhance close contact between the electrodes was charged to 4.2 V at a constant current corresponding to 0.2 C and then discharged to 3 V at a constant current of 0.2 C. This operation was taken as one cycle, and three cycles were conducted to stabilize the battery. In the fourth cycle, the battery was charged to 4.2 V at a constant current of 0.5 C, subsequently charged at a constant voltage of 4.2 V until the current value became 0.05 C, and then discharged to 3 V at a constant current of 0.2 C to determine the initial discharge capacity.

Here, "1 C" means the current value at which the reference capacity of the battery is discharged over 1 hour. For example, 0.2 C is 1/5 the current value.

[Evaluation of Overcharge Characteristics]

The battery which had undergone the capacity evaluation test was immersed in an ethanol bath, and the volume thereof was measured. Thereafter, at 45˚C, the battery was subjected to constant-current charge at a constant current

of 0.2 C to 4.9 V and, at the time when a voltage of 4.9 V had been reached, the current was cut. This battery which had undergone the overcharge test was examined for open-circuit voltage (OCV).

Subsequently, the battery was immersed in an ethanol bath, and the volume thereof was measured. The amount of an evolved gas was determined from the change in volume through the overcharge. Batteries having a smaller value of OCV after the overcharge test are in a lowly overcharged state and have higher safety during overcharge. Furthermore, the larger the amount of a gas evolved during overcharge, the more the battery is preferred. This is because in batteries in which an abnormal increase in internal pressure resulting from an abnormality, e.g., overcharge, is detected to make the safety valve work, it is possible to make the safety valve work in an earlier stage.

In addition, batteries which have a larger difference between the amount of a gas evolved during overcharge and the amount of a gas evolved during high-temperature continuous charge or the like are preferred because the safety valve in such a battery can be prevented from erroneously working during high-temperature continuous charge or the like, while enabling the safety valve to work reliably when the battery is overcharged.

[Evaluation of High-Temperature Continuous-Charge Characteristics]

The battery which had undergone the capacity evaluation test was immersed in an ethanol bath, and the volume thereof was measured. Thereafter, at 60˚C, the battery was subjected to constant-current charge at a constant current of 0.5 C and, at the time when a voltage of 4.25 V had been reached, the charge was changed to constant-voltage charge to conduct continuous charge for 1 week.

After the continuous-charge test, the battery was cooled to 25˚C and then immersed in an ethanol bath to measure the volume thereof. The amount of an evolved gas was determined from the change in volume through the continuous charge.

After the determination of the amount of an evolved gas, the battery was discharged at 25˚C and a constant current of 0.2 C to 3 V to determine the residual capacity remaining after the continuous-charge test. The proportion of the discharge capacity after the continuous-charge test to the initial discharge capacity was determined, and this proportion was taken as residual capacity (%) remaining after the continuous-charge test.

Next, at 25˚C, the battery was charged to 4.2 V at a constant current of 0.5 C, subsequently charged at a constant voltage of 4.2 V until the current value became 0.05 C, and discharged to 3 V at a constant current of 1 C to determine the 1-C discharge capacity of the battery which had undergone the continuous-charge test. The proportion of the 1-C discharge capacity after the continuous-charge test to the initial discharge capacity was determined, and this proportion was taken as 1-C capacity (%) remaining after the continuous-charge test.

(EXAMPLE 17)

[Production of Negative Electrode]

Ninety-four parts by mass of a natural-graphite powder which had a value of d for the lattice planes (002) and a crystallite size (Lc), both determined by X-ray diffractometry, of 0.336 nm and 652 nm, respectively, an ash content of 0.07 parts by mass, a median diameter as determined by the laser diffraction/scattering method of 12 $\mu$m, a specific surface area as determined by the BET method of 7.5 $m^2/g$, and a value of R ($=I_B/I_A$) and a half-value width of the peak appearing in the range of 1,570-1,620 $cm^{-1}$, both determined by Raman spectrometry using argon ion laser light, of 0.12 and 19.9 $cm^{-1}$, respectively, was mixed with 6 parts by mass of poly(vinylidene fluoride) (trade name "KF-1000", manufactured by Kureha Chemical Industry Co., Ltd.). N-Methyl-2-pyrrolidone was added thereto to slurry the mixture. This slurry was evenly applied to one surface of a copper foil having a thickness of 12 $\mu$m and dried, and the resultant coated foil was pressed so as to result in a negative-electrode active-material layer having a density of 1.67 $g/cm^3$. Thus, a negative electrode was obtained.

[Production of Positive Electrode]

Ninety parts by mass of $LiCoO_2$ was mixed with 4 parts by mass of carbon black and 6 parts by mass of poly (vinylidene fluoride) (trade name "KF-1000", manufactured by Kureha Chemical Industry Co., Ltd.). N-Methyl-2-pyrrolidone was added thereto to slurry the mixture. This slurry was evenly applied to both surfaces of an aluminum foil having a thickness of 15 $\mu$m and dried. The resultant coated foil was pressed so as to result in a positive-electrode active-material layer having a density of 3.2 $g/cm^3$. Thus, a positive electrode was obtained.

[Production of Electrolytic Solution]

In a dry argon atmosphere, a mixture of ethylene carbonate, ethyl methyl carbonate, and dimethyl carbonate

(volume ratio, 2:3:3) was mixed with 2% by mass vinylene carbonate and 1% by mass 4-cyclohexylphenyl methanesulfonate in terms of the contents in the nonaqueous electrolytic solution. Subsequently, sufficiently dried $LiPF_6$ was dissolved therein in such an amount as to result in a proportion thereof of 1.0 mol/L. Thus, an electrolytic solution was obtained.

[Production of Nonaqueous-Electrolyte Secondary Battery]

The positive electrode and negative electrode described above and a separator made of polyethylene were stacked in the order of negative electrode/separator/positive electrode/separator/negative electrode to produce a battery element. This battery element was inserted into a bag constituted of a laminated film obtained by coating both surfaces of aluminum (thickness, 40 μm) with a resin layer, with terminals of the positive electrode and negative electrodes projecting outward. Thereafter, the electrolytic solution was injected into the bag, which was vacuum-sealed to produce a sheet-form battery. This battery was evaluated for overcharge characteristics and high-temperature continuous-charge characteristics. The results of the evaluation are shown in Table 3.

(EXAMPLE 18)

A sheet-form battery was produced in the same manner as in Example 17, except that 4-t-amylphenyl methanesulfonate was used in place of the 4-cyclohexylphenyl methanesulfonate in the electrolytic solution of Example 1. This battery was evaluated for overcharge characteristics and high-temperature continuous-charge characteristics. The results of the evaluation are shown in Table 3.

(EXAMPLE 19)

A sheet-form battery was produced in the same manner as in Example 17, except that use was made of an electrolytic solution prepared by mixing a mixture of ethylene carbonate, ethyl methyl carbonate, and dimethyl carbonate (volume ratio, 2:3:3) with 2% by mass vinylene carbonate, 0.5% by mass lithium difluorophosphate, and 1% by mass 4-cyclohexylphenyl methanesulfonate in terms of the contents in the nonaqueous electrolytic solution and then dissolving sufficiently dried $LiPF_6$ therein in such an amount as to result in a proportion thereof of 1.0 mol/L. This battery was evaluated for overcharge characteristics and high-temperature continuous-charge characteristics. The results of the evaluation are shown in Table 3.

(EXAMPLE 20)

A sheet-form battery was produced in the same manner as in Example 19, except that 4-t-amylphenyl methanesulfonate was used in place of the 4-cyclohexylphenyl methanesulfonate in the electrolytic solution of Example 3. This battery was evaluated for overcharge characteristics and high-temperature continuous-charge characteristics. The results of the evaluation are shown in Table 3.

(EXAMPLE 21)

A sheet-form battery was produced in the same manner as in Example 17, except that use was made of an electrolytic solution prepared by mixing a mixture of ethylene carbonate, ethyl methyl carbonate, and dimethyl carbonate (volume ratio, 2:3:3) with 1% by mass vinylene carbonate, 1% by mass fluoroethylene carbonate, and 1% by mass 4-cyclohexylphenyl methanesulfonate in terms of the contents in the nonaqueous electrolytic solution and then dissolving sufficiently dried $LiPF_6$ therein in such an amount as to result in a proportion thereof of 1.0 mol/L. This battery was evaluated for overcharge characteristics and high-temperature continuous-charge characteristics. The results of the evaluation are shown in Table 3.

(EXAMPLE 22)

A sheet-form battery was produced in the same manner as in Example 17, except that 4-cyclohexylphenyl ethanesulfonate was used in place of the 4-cyclohexylphenyl methanesulfonate in the electrolytic solution of Example 17. This battery was evaluated for overcharge characteristics and high-temperature continuous-charge characteristics. The results of the evaluation are shown in Table 3.

(COMPARATIVE EXAMPLE 5)

A sheet-form battery was produced in the same manner as in Example 17, except that use was made of an electrolytic solution prepared by mixing a mixture of ethylene carbonate, ethyl methyl carbonate, and dimethyl carbonate (volume ratio, 2:3:3) with 2% by mass vinylene carbonate in terms of the content in the nonaqueous electrolytic solution and then dissolving sufficiently dried $LiPF_6$ therein in such an amount as to result in a proportion thereof of 1.0 mol/L. This battery was evaluated for overcharge characteristics and high-temperature continuous-charge characteristics. The results of the evaluation are shown in Table 3.

(COMPARATIVE EXAMPLE 6)

A sheet-form battery was produced in the same manner as in Example 17, except that phenylcyclohexane was used in place of the 4-cyclohexylphenyl methanesulfonate in the electrolytic solution of Example 17. This battery was evaluated for overcharge characteristics and high-temperature continuous-charge characteristics. The results of the evaluation are shown in Table 3.

(COMPARATIVE EXAMPLE 7)

A sheet-form battery was produced in the same manner as in Example 17, except that phenyl methanesulfonate was used in place of the 4-cyclohexylphenyl methanesulfonate in the electrolytic solution of Example 17. This battery was evaluated for overcharge characteristics and high-temperature continuous-charge characteristics. The results of the evaluation are shown in Table 3.

(COMPARATIVE EXAMPLE 8)

A sheet-form battery was produced in the same manner as in Example 17, except that 4-methylphenyl methanesulfonate was used in place of the 4-cyclohexylphenyl methanesulfonate in the electrolytic solution of Example 17. This battery was evaluated for overcharge characteristics and high-temperature continuous-charge characteristics. The results of the evaluation are shown in Table 3.

[Table 2]

| Composition of Electrolytic Solution | | | | |
|---|---|---|---|---|
| | Compound represented by general formula (3) or comparative compound | | Other compound(s) | |
| | Kind | Amount (mass %) | Kind | Amount (mass %) |
| Example 17 | 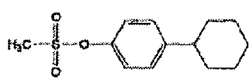 | 1 | vinylene carbonate | 2 |
| Example 18 | 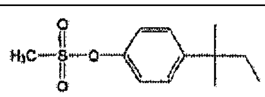 | 1 | vinylene carbonate | 2 |
| Example 19 | 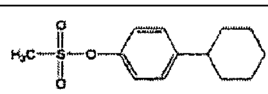 | 1 | vinylene carbonate<br>lithium difluorophosphate | 2<br>0.5 |
| Example 20 | 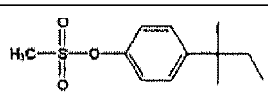 | 1 | vinylene carbonate<br>lithium difluorophosphate | 2<br>0.5 |
| Example 21 | 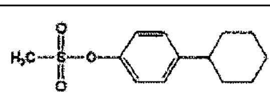 | 1 | vinylene carbonate<br>fluoroethylene carbonate | 1<br>1 |
| Example 22 | 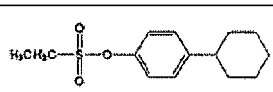 | 1 | vinylene carbonate | 2 |

(continued)

| Composition of Electrolytic Solution | | | | |
|---|---|---|---|---|
| | Compound represented by general formula (3) or comparative compound | | Other compound(s) | |
| | Kind | Amount (mass %) | Kind | Amount (mass %) |
| Comparative Example 5 | - | - | vinylene carbonate | 2 |
| Comparative Example 6 | 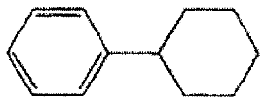 | 1 | vinylene carbonate | 2 |
| Comparative Example 7 | 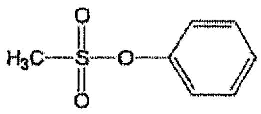 | 1 | vinylene carbonate | 2 |
| Comparative Example 8 | 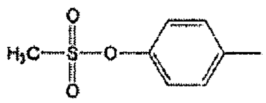 | 1 | vinylene carbonate | 2 |

[Table 3]

| Results of Evaluation of Overcharge Characteristics and Continuous-Charge Characteristics | | | | | |
|---|---|---|---|---|---|
| | Amount of gas evolved during overcharge (mL) | OCV after overcharge (V) | Amount of gas evolved during high-temperature continuous charge (mL) | Residual capacity after high-temperature continuous charge (%) | 1-C discharge capacity after high-temperature continuous charge (%) |
| Example 17 | 1.16 | 4.49 | 0.52 | 96 | 63 |
| Example 18 | 0.88 | 4.5 | 0.51 | 97 | 70 |
| Example 19 | 1.26 | 4.5 | 0.49 | 98 | 65 |
| Example 20 | 1.02 | 4.51 | 0.47 | 98 | 70 |
| Example 21 | 1.1 | 4.49 | 0.5 | 97 | 65 |
| Example 22 | 1.12 | 4.49 | 0.51 | 96 | 64 |
| Comparative Example 5 | 0.15 | 4.57 | 0.53 | 97 | 63 |
| Comparative Example 6 | 1.11 | 4.49 | 1.01 | 82 | 24 |
| Comparative Example 7 | 0.16 | 4.58 | 0.51 | 97 | 69 |
| Comparative Example 8 | 0.18 | 4.57 | 0.54 | 94 | 59 |

As shown in Table 3, the batteries of Comparative Examples 5, 7, and 8 had insufficient gas evolution during overcharge and had low safety during overcharge, although these batteries had excellent characteristics concerning gas evolution during high-temperature continuous charge, residual capacity, and 1-C discharge capacity. The battery of Comparative Example 6 was inferior in gas evolution during high-temperature continuous charge, residual capacity, and 1-C discharge capacity, although the battery had sufficient gas evolution during overcharge and high safety during

overcharge.

In contrast, the batteries of Examples 17 to 22 had sufficient gas evolution during overcharge, high safety during overcharge, and had excellent characteristics with respect to gas evolution during high-temperature continuous charge, residual capacity, and 1-C discharge capacity. It can hence be seen that the batteries employing the nonaqueous electrolytic solutions according to the invention are highly safe when overcharged and have excellent high-temperature continuous-charge characteristics.

While the invention has been described in detail and with reference to specific embodiments thereof, it will be apparent to one skilled in the art that various changes and modifications can be made therein without departing from the spirit and scope thereof. This application is based on a Japanese patent application filed on August 31, 2009 (Application No. 2009-200621) and a Japanese patent application filed on January 29, 2010 (Application No. 2010-019215), the entire contents thereof being incorporated herein by reference.

Industrial Applicability

Applications of the nonaqueous-electrolyte batteries of the invention are not particularly limited, and the batteries can be used in various known applications. Examples thereof include notebook type personal computers, pen-input personal computers, mobile personal computers, electronic-book players, portable telephones, portable facsimile telegraphs, portable copiers, portable printers, headphone stereos, video movie cameras, liquid-crystal TVs, handy cleaners, portable CD players, mini-disk players, transceivers, electronic pocketbooks, electronic calculators, memory cards, portable tape recorders, radios, backup power sources, motors, illuminators, toys, game machines, clocks and watches, stroboscopes, and cameras.

## Claims

**1.** A nonaqueous electrolytic solution comprising a lithium salt and a nonaqueous organic solvent, wherein the nonaqueous organic solvent comprises: at least one member selected from the group consisting of saturated cyclic carbonates, linear carbonates, and aliphatic carboxylic acid esters, in a total proportion exceeding 90% by volume; and a fluorine-substituted aromatic ester compound represented by the following general formula (1) in an amount of 0.01-10% by weight based on the weight of the whole nonaqueous electrolytic solution.

[Chem. 1]

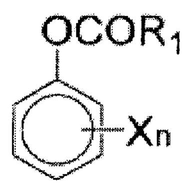

(1)

[In general formula (1), $R_1$ is a hydrocarbon group which has 1-12 carbon atoms and may have been substituted with a fluorine atom. X is a fluorine atom or a fluorine-substituted alkyl group having 1-12 carbon atoms, and n is an integer of 1-4.]

**2.** The nonaqueous electrolytic solution according to claim 1, wherein the saturated cyclic carbonates are at least one member selected from the group consisting of ethylene carbonate, propylene carbonate, butylene carbonate, monofluoroethylene carbonate, and difluoroethylene carbonate.

**3.** The nonaqueous electrolytic solution according to claim 1 or 2, wherein the linear carbonates are at least one member selected from the group consisting of dimethyl carbonate, ethyl methyl carbonate, diethyl carbonate, methyl propyl carbonate, and ethyl propyl carbonate.

**4.** The nonaqueous electrolytic solution according to any one of claims 1 to 3, wherein the aliphatic carboxylic acid esters are at least one member selected from the group consisting of compounds represented by the following general formula (2).

[Chem. 2]

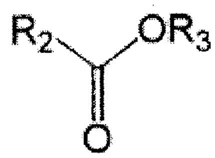

(2)

[In general formula (2), $R_2$ is an alkyl group which has 1-4 carbon atoms and may have been substituted with a fluorine atom. $R_3$ is an alkyl group which has 1-4 carbon atoms and may have been substituted with a fluorine atom.]

**5.** The nonaqueous electrolytic solution according to any one of claims 1 to 4, which further comprising at least one member selected from the group consisting of unsaturated cyclic carbonates, monofluorophosphoric acid salts, difluorophosphoric acid salts, sultones, and sulfites, in an amount of 0.01-10% by weight based on the weight of the whole nonaqueous electrolytic solution.

**6.** A nonaqueous-electrolyte battery comprising: a negative electrode and a positive electrode which are capable of occluding and releasing lithium ions; and a nonaqueous electrolytic solution, wherein the nonaqueous electrolytic solution is the nonaqueous electrolytic solution according to any one of claims 1 to 5.

**7.** A nonaqueous electrolytic solution comprising an electrolyte, a nonaqueous solvent, and a compound represented by general formula (3).

[Chem. 3]

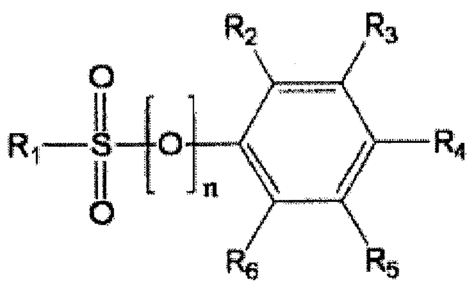

(3)

[In general formula (3), $R_1$ represents a hydrocarbon group which has 1-12 carbon atoms and may have been substituted with a fluorine atom, and $R_2$ to $R_6$ each independently represent a hydrogen atom, a fluorine atom, or an alkyl group which has 1-12 carbon atoms and may have been substituted with a fluorine atom, and at least one of $R_2$ to $R_6$ represents an alkyl group which has 2 or more carbon atoms and may have been substituted with a fluorine atom. Symbol n represents an integer of 0 or 1. When n is 1, at least one of $R_2$ to $R_6$ represents an alkyl group which has 5 or more carbon atoms and may have been substituted with a fluorine atom.]

**8.** The nonaqueous electrolytic solution according to claim 7, wherein in general formula (3), $R_1$ represents a group selected from the group consisting of methyl, ethyl, vinyl, phenyl, and trifluoromethyl, and $R_2$ to $R_6$ each independently represent a hydrogen atom or an alkyl group which has 2-6 carbon atoms and may have been substituted with a fluorine atom.

**9.** The nonaqueous electrolytic solution according to claim 7 or 8, wherein in general formula (3), at least one of $R_2$ to $R_6$ represents an alkyl group which has 5 or more carbon atoms and may have been substituted with a fluorine atom.

**10.** The nonaqueous electrolytic solution according to any one of claims 7 to 9, which comprises the compound represented by general formula (3) in an amount of 0.001-10% by mass based on the weight of the whole nonaqueous electrolytic solution.

**11.** The nonaqueous electrolytic solution according to any one of claims 7 to 10, which further comprises at least one compound selected from the group consisting of cyclic carbonate compounds having a carbon-carbon unsaturated bond, cyclic carbonate compounds having a fluorine atom, monofluorophosphoric acid salts, and difluorophosphoric acid salts.

**12.** A nonaqueous-electrolyte battery comprising: a negative electrode and a positive electrode which are capable of occluding and releasing lithium ions; and a nonaqueous electrolytic solution, wherein the nonaqueous electrolytic solution is the nonaqueous electrolytic solution according to any one of claims 7 to 11.

## INTERNATIONAL SEARCH REPORT

International application No.
PCT/JP2010/064752

A. CLASSIFICATION OF SUBJECT MATTER
*H01M10/0567*(2010.01)i, *H01M10/052*(2010.01)i, *H01M10/0569*(2010.01)i

According to International Patent Classification (IPC) or to both national classification and IPC

B. FIELDS SEARCHED

Minimum documentation searched (classification system followed by classification symbols)
H01M10/0567, H01M10/052, H01M10/0569, H01G9/038

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
JSTPlus(JDreamII),

C. DOCUMENTS CONSIDERED TO BE RELEVANT

| Category* | Citation of document, with indication, where appropriate, of the relevant passages | Relevant to claim No. |
|---|---|---|
| X | JP 2003-282055 A (Sanyo Electric Co., Ltd.), 03 October 2003 (03.10.2003), claims; paragraphs [0017] to [0022]; examples & US 2003/0180618 A1 | 1-6 |
| X | WO 2009/57515 A1 (Ube Industries, Ltd.), 07 May 2009 (07.05.2009), abstract; claims; paragraphs [0033] to [0042] (Family: none) | 7-12 |
| A | JP 2008-91823 A (Japan Carlit Co., Ltd.), 17 April 2008 (17.04.2008), abstract; claims; examples (Family: none) | 1-6 |

☒ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>26 October, 2010 (26.10.10) | Date of mailing of the international search report<br>09 November, 2010 (09.11.10) |
| Name and mailing address of the ISA/<br>Japanese Patent Office | Authorized officer |
| Facsimile No. | Telephone No. |

Form PCT/ISA/210 (second sheet) (July 2009)

INTERNATIONAL SEARCH REPORT

International application No. PCT/JP2010/064752

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-15728 A (NEC Corp.), 18 January 2002 (18.01.2002), abstract; claims & US 6818353 B2 & WO 2002/003485 A1 | 1-6 |
| A | JP 8-306387 A (Mitsubishi Chemical Corp.), 22 November 1996 (22.11.1996), abstract; claims; examples (Family: none) | 1-6 |
| A | WO 2005/091422 A1 (Ube Industries, Ltd.), 29 September 2005 (29.09.2005), abstract; claims; examples & US 2008/0241704 A1 & EP 1729365 A1 & CA 2558290 A & KR 10-2007-0004755 A & CN 1934743 A | 1-6 |
| A | WO 2009/107786 A1 (Mitsubishi Chemical Corp.), 03 September 2009 (03.09.2009), abstract; claims; examples & JP 2009-295507 A & JP 2009-231283 A & JP 2010-27610 A | 1-6 |
| A | WO 2008/123014 A1 (Ube Industries, Ltd.), 16 October 2008 (16.10.2008), abstract; claims; examples & US 2010/0055576 A & EP 2133327 A1 & CN 101646648 A & KR 10-2010-0014910 A | 7-12 |
| A | WO 99/16144 A1 (Mitsubishi Chemical Corp.), 01 April 1999 (01.04.1999), abstract; claims; page 7 & JP 2002-216841 A & JP 2002-216850 A & JP 11-162511 A & US 6670078 B1 & EP 1030399 A1 & DE 69840833 D & AU 9095198 A & CN 1278953 A | 7-12 |
| A | JP 2002-56891 A (Mitsui Chemicals, Inc.), 22 February 2002 (22.02.2002), abstract; claims; examples (Family: none) | 7-12 |

Form PCT/ISA/210 (continuation of second sheet) (July 2009)

**INTERNATIONAL SEARCH REPORT**

International application No.
PCT/JP2010/064752

Continuation of B. FIELDS SEARCHED
Electronic data base consulted during the international search (name of data base and, where practicable, search terms used)

RICHIUMU|Li|HISUI|YUKI DENKAI|PORIMA(8W)DENCHI|BATTERI*
(SURUHONSANFENIRU+FENIRUSURUHONETO+SAKUSANFENIRU+FENIRUASETETO)
(in Japanese)

Form PCT/ISA/210 (extra sheet) (July 2009)

**INTERNATIONAL SEARCH REPORT**

International application No.
PCT/JP2010/064752

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The inventions in claims 1 - 12 are considered to be common to one another in only such a matter as "non-aqueous electrolytic liquid containing an electrolyte and a non-aqueous solvent".

(continued to extra sheet)

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

INTERNATIONAL SEARCH REPORT

International application No.
PCT/JP2010/064752

Continuation of Box No.III of continuation of first sheet(2)

However, the above-said matter is a publicly known technical matter described in, for example, JP 2003-282055 A (Sanyo Electric Co., Ltd., claims, [0017] - [0022], examples), and therefore cannot be regarded to be a special technical feature. Any other common matter, which can be considered to be a special technical feature, cannot be found. Consequently, it is considered that between the inventions in claims 1 - 6 and the inventions in claims 7 - 12, there is no special technical feature for linking those inventions as to form a single general inventive concept.

In conclusion, the inventions in claims 1 - 12 involve two inventions comprising “the inventions in claims 1 - 6” and “the inventions in claims 7 - 12” that do not comply with the requirement of unity of invention.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003282055 A
- JP 2009512418 T
- JP 9106835 A
- JP 9171840 A
- JP 2002050398 A
- JP 2007317654 A
- JP 2009200621 A
- JP 2010019215 A